(19)

**Europäisches Patentamt**
**European Patent Office**
**Office européen des brevets**

(11)  **EP 4 615 010 A1**

(12)  # EUROPEAN PATENT APPLICATION
published in accordance with Art. 153(4) EPC

(43)  Date of publication:
**10.09.2025  Bulletin 2025/37**

(21)  Application number: **22963772.3**

(22)  Date of filing: **31.10.2022**

(51)  International Patent Classification (IPC):
***H04R 29/00*** (2006.01)

(52)  Cooperative Patent Classification (CPC):
**H04R 29/00**

(86)  International application number:
**PCT/CN2022/128763**

(87)  International publication number:
**WO 2024/092453 (10.05.2024 Gazette 2024/19)**

(84)  Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71)  Applicant: **Beijing Xiaomi Mobile Software Co.,
Ltd.**
**Beijing 100085 (CN)**

(72)  Inventor: **WANG, Bin**
**Beijing 100085 (CN)**

(74)  Representative: **Dehns Germany Partnerschaft
mbB**
**Theresienstraße 6-8**
**80333 München (DE)**

(54)  **WIND NOISE MEASUREMENT METHOD/APPARATUS/DEVICE, AND STORAGE MEDIUM**

(57)  Provided in the present disclosure are a wind noise measurement method/apparatus/device, and a storage medium. The method comprises: for different wind speeds and different wind directions, respectively collecting signal data in a first testing environment, and sending the signal data in the first test environment to a test device, so that the test device determines the wind noise influence of wind, which has different wind speeds and different wind directions, on the audio quality of a terminal device under test; or, playing an audio test signal to a sound collection device under different wind speeds and different wind directions, so that the sound collection device respectively collects signal data in a second testing environment for different wind speeds and different wind directions. Provided in the present disclosure is a wind noise measurement method suitable for a terminal device, which method can be used for measuring the influence of wind noise on various types of terminal devices.

Collect signal data under a first test environment for different wind speeds and different wind directions, respectively, and send the signal data under the first test environment to a test device, so that the test device determines an impact of wind noise of winds at different wind speeds and different wind directions on an audio quality of the terminal device under test; or, play an audio test signal to a sound collection device at different wind speeds and different wind directions, so that the sound collection device collects signal data under a second test environment for different wind speeds and different wind directions, respectively

— 101

FIG. 1a

Description

TECHNICAL FIELD

The present disclosure relates to the communication technical field, and in particular to a wind noise measurement method /apparatus/device and a storage medium.

BACKGROUND

Wind noise is a very disturbing external noise when a device collects and plays audio. The wind noise not only causes a serious decline in audio quality, but even makes the device unable to collect or play audio normally. Therefore, it is usually needed to measure the wind noise to measure the impact of the wind noise on the audio of the device, and thus evaluate the device's ability to resist the wind noise, so as to facilitate design and improvement of the device.

However, the related art only proposes a wind noise measurement method for a microphone in an acoustic system, and the wind noise measurement method is only applicable to the microphone in the acoustic system, but not applicable to other terminal devices. In addition, the method in the related art is only for evaluation of a mono audio signal, the method can only measure the impact of the wind noise on the mono audio signal, but cannot measure the impact of the wind noise on multi-channel audio signals. Therefore, there is an urgent need for a wind noise measurement method applicable to various terminal devices and multi-channel audio signals.

SUMMARY

The wind noise measurement method/apparatus/device and storage medium proposed in the present disclosure can be applied to measure wind noise for audio of various terminal devices.

According to a first aspect, an embodiment of the present disclosure provides a wind noise measurement method. The method is performed by a terminal device under test. The method includes:

collecting signal data under a first test environment for different wind speeds and different wind directions, respectively, and sending the signal data under the first test environment to a test device, so that the test device determines an impact of wind noise of winds at different wind speeds and different wind directions on an audio quality of the terminal device under test; or

playing an audio test signal to a sound collection device at different wind speeds and different wind directions, so that the sound collection device collects signal data under a second test environment for the different wind speeds and the different wind directions, respectively.

In the present disclosure, the terminal device under test collects the signal data under the first test environment for different wind speeds and different wind directions, respectively, and send the signal data under the first test environment to the test device, so that the test device can determine the impact of the wind noise of winds at different wind speeds and different wind directions on an audio quality of the terminal device under test; or, the terminal device under test plays an audio test signal to the sound collection device at different wind speeds and different wind directions, so that the sound collection device can collect signal data under the second test environment for different wind speeds and different wind directions. After the sound collection device collects the signal data under the second test environment, the signal data is sent to the test device, so that the test device can determine the impact of the wind noise of winds at different wind speeds and different wind directions on the audio quality of the terminal device under test. It can be seen that the present disclosure provides a wind noise measurement method applicable to terminal device(s), and the method can be used to measure the impact of the wind noise on various types of terminal devices.

Optionally, the first test environment includes:

only applying the winds at the wind speeds and the wind directions to the terminal device under test via a wind generator;
playing the audio test signal to the terminal device under test via a sound source device, and applying the winds at the wind speeds and the wind directions to the terminal device under test via the wind generator;
only playing the audio test signal to the terminal device under test via the sound source device.

Optionally, the signal data under the first test environment includes:

pure noise signal data X1 collected by the terminal device under test when only the winds are applied;
audio test signal data Y1 under a noisy environment collected by the terminal device under test when the audio test signal is played and the winds are applied;
audio test signal data Z1 under a quiet environment collected by the terminal device under test when only the audio test signal is played.

Optionally, collecting the signal data under the first test environment respectively includes:
in response to the audio test signal played by the sound source device to the terminal device under test including a plurality of channels, collecting signal data corresponding to each channel under the first test environment, respectively.

Optionally, sending the signal data under the first test environment to the test device includes: sending the signal data corresponding to each channel under the first test environment to the test device.

Optionally, the sound source device includes at least one of:

an artificial mouth; or
a speaker.

Optionally, the audio test signal played by the sound source device to the terminal device under test is determined by the sound source device based on an audio test signal that is obtained from an other device and needs to be played;

wherein in response to the sound source device being the speaker, the audio test signal played by the sound source device to the terminal device under test is: an audio test signal that is obtained by the sound source device from the other device and needs to be played;
wherein in response to the sound source device being the artificial mouth, the audio test signal played by the sound source device to the terminal device under test is: a signal obtained by the sound source device after performing, based on ambient noise, boosting and compensation on an audio test signal that is obtained from the other device and needs to be played.

Optionally, collecting the signal data under the first test environment respectively includes: collecting the signal data under the first test environment respectively when no anti-noise mode is turned on and when different anti-noise modes are turned on.

Optionally, sending the signal data under the first test environment to the test device includes: sending, to the test device, corresponding signal data under the first test environment when no anti-noise mode is turned on and signal data under the first test environment corresponding to the different anti-noise modes.

Optionally, playing the audio test signal to the sound collection device includes: playing the audio test signal to the sound collection device respectively when no anti-noise mode is turned on and when different anti-noise modes are turned on.

Optionally, the method further includes: obtaining the audio test signal.

According to a second aspect, an embodiment of the present disclosure provides a wind noise measurement method. The method is performed by a sound source device. The method includes: playing an audio test signal to a terminal device under test at different wind speeds and different wind directions, so that the terminal device under test collects signal data under a first test environment for the different wind speeds and the different wind directions, respectively.

Optionally, the method further includes: obtaining the audio test signal that needs to be played.

Optionally, the sound source device includes at least one of:

an artificial mouth; or
a speaker.

Optionally, in response to the sound source device being the artificial mouth, playing the audio test signal to the terminal device under test includes:

based on ambient noise, performing boosting and compensation on the obtained audio test signal that needs to be played, and sending the signal after boosting and compensation to the terminal device under test;
wherein in response to the sound source device being the speaker, playing the audio test signal to the terminal device under test includes:
directly playing, to the terminal device under test, the obtained audio test signal that needs to be played.

According to a third aspect, an embodiment of the present disclosure provides a wind noise measurement method. The method is performed by a sound collection device. The method includes: collecting signal data under a second test environment for different wind speeds and different wind directions, respectively, and sending the signal data under the second test environment to a test device, so that the test device determines the impact of the wind noise of winds at the different wind speeds and the different wind directions on an audio quality of a terminal device under test.

Optionally, the second test environment includes:

only applying the winds at the wind speeds and the wind directions to the terminal device under test via a wind generator;
playing the audio test signal to a sound collection device via the terminal device under test, and applying the winds at the wind speeds and the wind directions to the terminal device under test via the wind generator;
only playing the audio test signal to the sound collection device via the terminal device under test.

Optionally, the signal data under the second test environment includes:

pure noise signal data X2 collected by the sound collection device when only the winds are applied;
audio test signal data Y2 under an noisy environment collected by the sound collection device when the audio test signal is played and the winds are applied;
audio test signal data Z2 under a quiet environment collected by the sound collection device when only the audio test signal is played.

Optionally, collecting the signal data under the second test environment respectively includes:
in response to the audio test signal played by the terminal device under test to the sound collection device including a plurality of channels, collecting signal data corresponding to each channel under the second test environment, respectively.

Optionally, sending the signal data under the second test environment to the test device includes:
sending the signal data corresponding to each channel under the second test environment to the test device.

Optionally, collecting the signal data under the second test environment respectively includes:
collecting the signal data under the second test environment respectively when no anti-noise mode is turned on and when different anti-noise modes are turned on.

Optionally, sending the signal data under the second test environment to the test device includes:
sending, to the test device, corresponding signal data under the second test environment when no anti-noise mode is turned on and signal data under the second test environment corresponding to different anti-noise modes.

According to a fourth aspect, an embodiment of the present disclosure provides a wind noise measurement method. The method is performed by a test device. The method includes:

receiving signal data under a first test environment corresponding to different wind speeds and different wind directions sent from a terminal device under test, and/or signal data under a second test environment corresponding to different wind speeds and different wind directions sent from a sound collection device;

calculating measurement results corresponding to the different wind speeds and the different wind directions based on the signal data under the first test environment and/or the signal data under the second test environment; and

based on the measurement results, determining the impact of the wind noise of winds at the different wind speeds and the different wind directions on an audio quality of the terminal device under test.

Optionally, the first test environment includes:

only applying the winds at the wind speeds and the wind directions to the terminal device under test via a wind generator;

playing an audio test signal to the terminal device under test via a sound source device, and applying the winds at the wind speeds and the wind directions to the terminal device under test via the wind generator;

only playing the audio test signal to the terminal device under test via the sound source device.

Optionally, the signal data under the first test environment includes:

pure noise signal data X1 collected by the terminal device under test when only the winds are applied;

audio test signal data Y1 under a noisy environment collected by the terminal device under test when the audio test signal is played and the winds are applied ;

audio test signal data Z1 under a quiet environment collected by the terminal device under test when only the audio test signal is played.

Optionally, the second test environment includes:

only applying the winds at the wind speeds and the wind directions to the terminal device under test via a wind generator;

playing an audio test signal to the sound collection device via the terminal device under test, and applying the winds at the wind speeds and the wind directions to the terminal device under test via the wind generator;

only playing the audio test signal to the sound collection device via the terminal device under test.

Optionally, the signal data under the second test environment includes:

pure noise signal data X2 collected by the sound collection device when only the winds are applied;

audio test signal data Y2 under a noisy environment collected by the sound collection device when the audio test signal is played and the winds are applied;

audio test signal data Z2 under a quiet environment collected by the sound collection device when only the audio test signal is played.

Optionally, receiving the signal data under the first test environment corresponding to the different wind speeds and the different wind directions sent from the terminal device under test includes:

receiving signal data corresponding to each channel under the first test environment corresponding to the different wind speeds and the different wind directions sent from the terminal device under test;

wherein receiving the signal data under the second test environment corresponding to the different wind speeds and the different wind directions sent from the sound collection device includes:

receiving signal data corresponding to each channel under the second test environment corresponding to the different wind speeds and the different wind directions sent from the sound collection device.

Optionally, calculating the measurement results corresponding to the different wind speeds and the different wind directions based on the signal data under the first test environment and/or the signal data under the second test environment includes:

calculating a measurement result for each channel corresponding to the different wind speeds and the different wind directions based on the signal data corresponding to the each channel under the first test environment and/or the signal data corresponding to the each channel under the second test environment;
wherein determining the impact of wind noise of the different wind speeds and the different wind directions on the audio quality of the terminal device under test based on the measurement results includes:
based on the measurement result for each channel corresponding to the different wind speeds and the different wind directions, determining the impact of the wind noise of the different wind speeds and the different wind directions on the audio quality of each channel of the terminal device under test.

Optionally, receiving the signal data under the first test environment corresponding to the different wind speeds and the different wind directions sent from the terminal device under test includes:

receiving the signal data under the first test environment corresponding to the different wind speeds and the different wind directions when no anti-noise mode is turned on, and the signal data under the first test environment corresponding to the different wind speeds and the different wind directions in different anti-noise modes sent from the terminal device under test;
wherein receiving the signal data under the second test environment corresponding to the different wind speeds and the different wind directions sent from the sound collection device includes:
receiving the signal data under the second test environment corresponding to the different wind speeds and the different wind directions when no anti-noise mode is turned on, and the signal data under the second test environment corresponding to the different wind speeds and the different wind directions in different anti-noise modes sent from the sound collection device.

Optionally, calculating the measurement results corresponding to the different wind speeds and the different wind directions based on the signal data under the first test environment and/or the signal data under the second test environment includes:

based on the signal data under the first test environment and/or the signal data under the second test environment corresponding to the different wind speeds and the different wind directions in different anti-noise modes, calculating the measurement results corresponding to the different wind speeds and the different wind directions in different anti-noise modes; and
based on the signal data under the first test environment and/or the signal data under the second test environment corresponding to the different wind speeds and the different wind directions when no anti-noise mode is turned on, calculating the measurements corresponding to the different wind speeds and the different wind directions when no anti-noise mode is turned on;
wherein determining the impact of the wind noise of the different wind speeds and the different wind directions on the audio quality of the terminal device under test based on the measurement results includes:

based on the measurement results corresponding to the different wind speeds and the different wind directions in different anti-noise modes, determining the impact of the wind noise of the different wind speeds and the different wind directions in different anti-noise modes on the audio quality of the terminal device under test; and
based on the measurement results corresponding to the different wind speeds and the different wind directions when no anti-noise mode is turned on, determining the impact of the wind noise of the different wind speeds and the different wind directions on the audio quality of the terminal device under test when no anti-noise mode is turned on.

Optionally, the measurement result includes at least one of:

a directional response of wind noise;
a wind noise overload point;
a wind noise distortion rate; or
a signal quality parameter used to evaluate a communication signal of the terminal device under test.

Optionally, in response to the terminal device under test being a signal transmission end, the directional response of the wind noise is: an audio signal sent by the terminal device under test to a signal reception end after the terminal device under test collects the audio signal;
wherein in response to the terminal device under test being a signal reception end, the directional response of the wind noise is: an audio signal collected by a sound collection side after the terminal device under test plays a received audio signal.
Optionally, the signal quality parameter includes at least one of:

a Signal-to-Noise Ratio (SNR);
a Signal-to-Distortion Ratio (SDR);
a Source-to-Artifact Ratio (SAR);
a Short-Time Objective Intelligibility (STOI); or
a Perceptual Evaluation of Speech Quality (PESQ).

Optionally, determining the impact of the wind noise of the different wind speeds and the different wind directions on the audio quality of the terminal device under test includes:

for the different wind speeds, representing a communication quality of the terminal device under test at a corresponding wind speed using a lowest signal quality parameter corresponding to all wind directions;
for each wind direction, determining a maximum wind speed corresponding to all measurement results that meet a preset condition among measurement results corresponding to the wind direction as a maximum wind speed that is supportable under the wind direction, and determining a minimum wind speed among maximum wind speeds that are supportable under all wind directions as a maximum wind speed that is supportable by the terminal device under test; and
determining a wind speed corresponding to a lowest wind noise overload point corresponding to all wind directions as a maximum wind speed that is supportable by the terminal device under test when collecting an ambient sound.

Optionally, the method further includes:
determining an anti-noise effect of each anti-noise mode based on corresponding measurement results when different anti-noise modes are turned on and a corresponding measurement result when no anti-noise mode is turned on.

According to a fifth aspect, an embodiment of the present disclosure provides a communication apparatus. The apparatus is configured in a terminal device under test. The communication apparatus includes:

a transceiving module, configured to collect signal data under a first test environment for different wind speeds and different wind directions, respectively, and send the signal data under the first test environment to a test device, so that the test device determines an impact of wind noise of winds at the different wind speeds and the different wind directions on an audio quality of the terminal device under test; or
wherein the transceiving module is further configured to play an audio test signal to a sound collection device at different wind speeds and different wind directions, so that the sound collection device collect signal data under a second test environment for the different wind speeds and the different wind directions.

According to a sixth aspect, an embodiment of the present disclosure provides a communication apparatus. The apparatus is configured in a sound source device. The communication apparatus includes:
a transceiving module configured to play an audio test signal to a terminal device under test at different wind speeds and different wind directions, so that the terminal device under test collects signal data under a first test environment for the different wind speeds and the different wind directions, respectively.

According to a seventh aspect, an embodiment of the present disclosure provides a communication apparatus. The apparatus is configured in a sound collection device. The communication apparatus includes:
a transceiving module configured to collect signal data under a second test environment for different wind speeds and different wind directions, and send the signal data under the second test environment to a test device, so that the test device determines an impact of wind noise of winds at the different wind speeds and the different wind directions on an audio quality of a terminal device under test.

According to an eighth aspect, an embodiment of the present disclosure provides a communication apparatus. The apparatus is configured in a test device. The communication apparatus includes:

a transceiving module configured to receive signal data under a first test environment corresponding to different wind speeds and different wind directions sent by a terminal device under test, and/or signal data under a second test environment corresponding to different wind speeds and different wind directions sent by a sound collection device; and
a processing module configured to calculate measurement results corresponding to the different wind speeds and the different wind directions based on the signal data under the first test environment and/or the signal data under the second test environment;
wherein the processing module is further configured to determine an impact of wind noise of winds at the different wind speeds and the different wind directions on an audio quality of the terminal device under test based on the measurement results.

According to a ninth aspect, an embodiment of the present disclosure provides a communication apparatus. The communication apparatus includes a processor. When the processor invokes a computer program in a memory, the method described in any one of the above first to fourth aspects is performed.

According to a tenth aspect, an embodiment of the present disclosure provides a communication apparatus. The communication apparatus includes a processor and a memory. A computer program is stored in the memory. The processor executes the computer program stored in the memory to cause the communication apparatus to perform the method described in any one of the above first to fourth aspects.

According to an eleventh aspect, an embodiment of the present disclosure provides a communication apparatus. The apparatus includes a processor and an interface circuit. The interface circuit is configured to receive code instructions and transmit the code instructions to the processor. The processor is configured to run the code instructions to cause the apparatus to perform the method described in any one of the above first to fourth aspects.

According to a twelfth aspect, an embodiment of the present disclosure provides a communication system. The system includes the communication apparatuses described in the fifth to eighth aspects, or the system includes the communication apparatus described in the ninth aspect, or the system includes the communication apparatus described in tenth aspect, or the system includes the communication apparatus described in the eleventh aspect.

According to a thirteenth aspect, an embodiment of the present disclosure provides a computer-readable storage medium for storing instructions used for the above-mentioned network device. When the instructions are executed, the terminal device perform the method described in any one of the above first to fourth aspects.

According to a fourteenth aspect, the present disclosure further provides a computer program product including a computer program, which, when run on a computer, causes the computer to perform the method described in any one of the above first to fourth aspects.

According to a fifteenth aspect, the present disclosure provides a chip system, which includes at least one processor and an interface, and is configured to support a network device to implement the functions involved in the method described in any one of the first to the fourth aspects, for example, determining or processing at least one of data and information involved in the above method. In a possible design, the chip system further includes a memory, and the memory is configured to store computer programs and data necessary for a source auxiliary node. The chip system may be formed by a chip, or the chip system may include a chip and other discrete device(s).

According to a sixteenth aspect, the present disclosure provides a computer program. When the computer program is run on a computer, the computer is caused to perform the method described in any one of the above first to fourth aspects.

BRIEF DESCRIPTION OF THE DRAWINGS

The above and/or additional aspects and advantages of the present disclosure will become apparent and easily understood from the following description of the embodiments in conjunction with the accompanying drawings, in which:

FIG. 1a is a schematic flowchart of a wind noise measurement method provided by another embodiment of the present disclosure;
FIG. 1b and FIG. 1c are schematic diagrams showing the connection relationships between various devices during wind noise measurement provided by an embodiment of the present disclosure;
FIG. 2 is a schematic flowchart of a wind noise measurement method provided by yet another embodiment of the present disclosure;
FIG. 3 is a schematic flowchart of a wind noise measurement method provided in yet another embodiment of the present disclosure;
FIG. 4 is a schematic flowchart of a wind noise measurement method provided by yet another embodiment of the present disclosure;
FIG. 5 is a schematic flowchart of a wind noise measurement method provided by another embodiment of the present disclosure;
FIG. 6 is a schematic flowchart of a wind noise measurement method provided in yet another embodiment of the present disclosure;
FIG. 7 is a schematic flowchart of a wind noise measurement method provided by yet another embodiment of the present disclosure;
FIG. 8 is a schematic flowchart of a wind noise measurement method provided by yet another embodiment of the present disclosure;
FIG. 9 is a schematic flowchart of a wind noise measurement method provided by yet another embodiment of the present disclosure;
FIG. 10 is a schematic flowchart of a wind noise measurement method provided by yet another embodiment of the present disclosure;
FIG. 11 is a schematic flowchart of a wind noise measurement method provided by yet another embodiment of the present disclosure;
FIG. 12 is a schematic flowchart of a wind noise measurement method provided by yet another embodiment of the present disclosure;
FIG. 13 is a schematic flowchart of a wind noise measurement method provided by yet another embodiment of the present disclosure;
FIG. 14 is a schematic flowchart of a wind noise measurement method provided by yet another embodiment of the present disclosure;
FIG. 15a is a schematic flowchart of a wind noise measurement method provided by yet another embodiment of the present disclosure;
FIG. 15b is a schematic flowchart of a wind noise measurement method provided by yet another embodiment of the present disclosure;
FIG. 16 is a schematic diagram of a structure of a communication apparatus provided by an embodiment of the present disclosure;

FIG. 17 is a schematic diagram of a structure of a communication apparatus provided by another embodiment of the present disclosure;

FIG. 18 is a schematic diagram of a structure of a communication apparatus provided by another embodiment of the present disclosure;

FIG. 19 is a schematic diagram of a structure of a communication apparatus provided by another embodiment of the present disclosure;

FIG. 20 is a block diagram of user equipment provided by an embodiment of the present disclosure;

FIG. 21 is a block diagram of a network-side device provided by an embodiment of the present disclosure.

## DETAILED DESCRIPTION

Example embodiments will be described in detail herein, examples of which are illustrated in the accompanying drawings. When the following description refers to the drawings, the same numbers in different drawings refer to the same or similar elements unless otherwise indicated. The implementations described in the following example embodiments do not represent all implementations consistent with embodiments of the invention. Rather, they are merely examples of apparatuses and methods consistent with some aspects of embodiments of the present disclosure as detailed in the appended claims.

The terms used in embodiments of the present disclosure are for the purpose of describing example embodiments only and are not intended to limit the embodiments of the present disclosure. As used in the embodiments of the present disclosure and the appended claims, the singular forms "a/an" and "the" are intended to include a plural form as well, unless the context clearly dictates otherwise. It will also be understood that the term "and/or" as used herein refers to and includes any or all possible combinations of one or more associated listed items.

It should be understood that although the terms first, second, third, etc. may be used to describe various information in the embodiments of the present disclosure, the information should not be limited to these terms. These terms are only used to distinguish information of the same type from each other. For example, without departing from the scope of the embodiments of the present disclosure, first information may also be called second information, and similarly, second information may also be called first information. Depending on the context, the words "if" and "in a case where..." as used herein may be interpreted as "when" or "at the time of..." or "in response to determining...".

Embodiments of the present disclosure are described in detail below, and examples of the embodiments are shown in the accompanying drawings, in which the same or similar reference numerals throughout represent the same or similar elements. The embodiments described below with reference to the accompanying drawings are illustrative and are intended to be used to explain the present disclosure, and cannot be understood as limiting the present disclosure.

To facilitate understanding, terms involved in the present disclosure are first introduced.

1. Wind noise

When there is no external sound field, a device is subjected to an equivalent sound pressure caused by a wind with a certain speed and a certain direction.

The measurement environment for the wind noise measurement method in the present disclosure should meet the following requirement(s):

the test environment should be a free field;
the noise in the test environment should not affect the test result(s);
the natural wind speed in the test environment should be 0 m/s;
if the wind noise is measured in a room, the size of the room used for the test should be large enough relative to the air duct and the terminal device under test, and should not cause additional impact(s) on the airflow during the test.

The wind noise measurement method/apparatus/device and storage medium provided by the embodiments of the present disclosure are described in detail below with reference to the accompanying drawings.

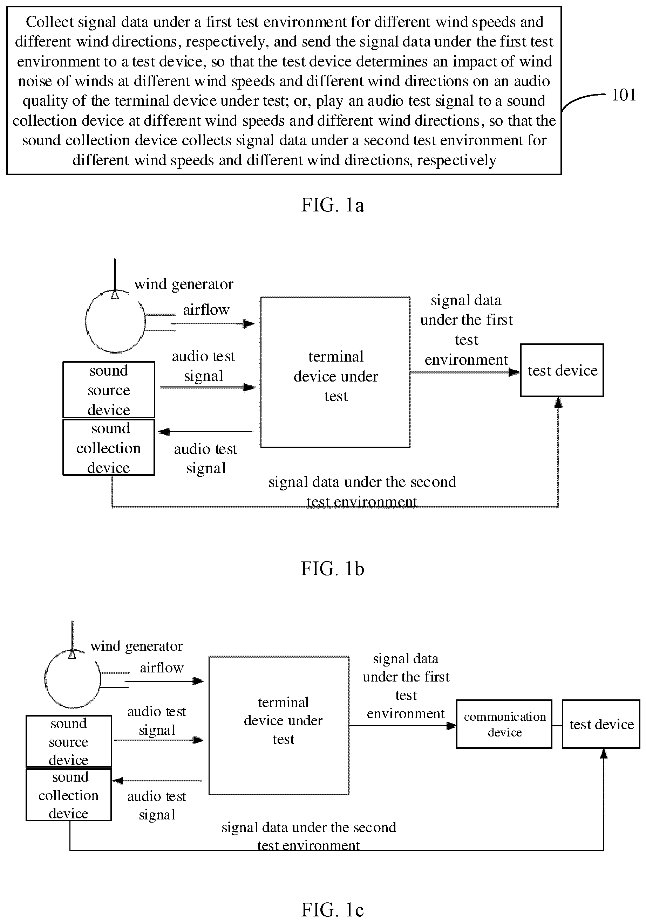

FIG. 1a is a schematic flowchart of a wind noise measurement method provided by an embodiment of the present disclosure. The method is performed by a terminal device under test. As shown in FIG. 1a, the wind noise measurement method may include the following step(s):

In step 101, signal data under a first test environment is collected for different wind speeds and different wind directions, respectively, and the signal data under the first test environment is sent to a test device, so that the test device determines an impact of wind noise of winds at different wind speeds and different wind directions on an audio quality of the terminal device under test; or, an audio test signal is played to a sound collection device at different wind speeds and different wind directions, so that the sound collection device collects signal data under a second test environment for different wind speeds and different wind directions, respectively.

In an embodiment of the present disclosure, the first test environment may include:

only applying the winds with the wind speeds and the wind directions to the terminal device under test via a wind generator;
playing the audio test signal to the terminal device under test via a sound source device, and applying the winds with the wind speeds and the wind directions to the terminal device under test via the wind generator;

only playing the audio test signal to the terminal device under test via the sound source device.

Based on this, in an embodiment of the present disclosure, the signal data under the first test environment corresponding to the above-mentioned different wind speeds and different wind directions may include:

pure noise signal data X1 collected by the terminal device under test when only the winds are applied; audio test signal data Y1 under a noisy environment collected by the terminal device under test when the audio test signal is played and the winds are applied; audio test signal data Z1 under a quiet environment collected by the terminal device under test when only the audio test signal is played.

And, in an embodiment of the present disclosure, after the terminal device under test collects the signal data under the first test environment for different wind speeds and different wind directions, the signal data under the first test environment may be sent to the test device, so that the test device determines the impact of the wind noise of winds at different wind speeds and different wind directions on the audio quality of the terminal device under test. It should be noted that in the present disclosure, the impact of the wind noise determined based on the signal data under the first test environment collected by the terminal device under test are mainly: an impact of the wind noise on the terminal device under test when the terminal device under test collects the audio signal in a case where the terminal device under test acts as a signal transmission end.

Specifically, in an embodiment of the present disclosure, when the terminal device acts as a signal transmission end, it usually needs to first collect an audio signal and then send the collected audio signal to a signal reception end. For example, when a user A is talking to a user B using his/her mobile phone A through the mobile phone B of the user B, if the user A is currently speaking, the mobile phone A is the signal transmission end and the mobile phone B is the signal reception end. The mobile phone A needs to first collect the sound emitted by the user A and form an audio signal, and sends the audio signal to the signal reception end (i.e., the mobile phone B), so that mobile phone B plays the corresponding audio signal to the user B. Based on this, in the present disclosure, the scenario in which "the terminal device under test collects signal data under the first test environment for different wind speeds and different wind directions" specifically simulates the scenario of collecting signals when the terminal device under test acts as a signal transmission end. Therefore, the impact of the wind noise determined based on the signal data under the first test environment collected by the terminal device under test should be: an impact of the wind noise on the terminal device under test when the terminal device under test collects the audio signal in a case where the terminal device under test acts as a signal transmission end.

Furthermore, it should be noted that the present disclosure does not limit the form of the above-mentioned terminal device under test. For example, the terminal device under test may be head-mounted, hands-free, or handheld. And, in an embodiment of the present disclosure, the above-mentioned wind generator should meet the following requirement(s):

the wind generated by the wind generator has characteristics close to the natural wind and can work stably during the test;
the noise of the wind generator does not affect the test result(s), and it can work stably at the wind speed required by the test;
the size of the air duct of the wind generator should be large enough relative to the size of the terminal device under test to sufficiently and fully cover the turbulence generated near the terminal device under test, ensuring that the test environment and the natural wind environment are as consistent as possible.

And, for example, in an embodiment of the present disclosure, the wind generator may be, for example, a radial fan for a short apparatus or an axial fan for a long apparatus.

In an embodiment of the present disclosure, the above-mentioned sound source device may be an artificial mouth and/or a speaker. The artificial mouth is used to output an audio test signal simulating a human voice, and the speaker is used to output an audio test signal in a non-human voice form. Furthermore, when the sound source device is a different device, the method of playing the audio test signal to the terminal device under test may also be different.

Specifically, the audio test signal played by the sound source device to the terminal device under test is determined by the sound source device based on an audio test signal that needs to be played and is obtained from an other device. In response to the sound source device being a speaker, the audio test signal played by the sound source device to the terminal device under test is: an audio test signal that needs to be played and is obtained by the sound source device from the other device. That is, when the sound source device is a speaker, after the sound source device obtains the audio test signal to be played from the other device, the sound source device directly plays the audio test signal to the terminal device under test.

In response to the sound source device being an artificial mouth, the audio test signal played by the sound source device to the terminal device under test is: a signal obtained by the sound source device after performing, based on the ambient noise, boosting and compensation on an audio test signal that needs to be played and is obtained from an other device. According to the Lombard effect, in actual situations, when the external ambient noise is large, people will consciously increase the volume when speaking. Based on this, when the sound source device is an artificial mouth, in order to ensure that it can accurately simulate human voice, before playing the audio test signal to the terminal device under test, it is needed to first perform, based on the ambient noise, boosting and compensation on the audio test signal that needs to be played and is obtained from the other device, and then play the signal after boosting and compensation to the terminal device under test.

In an embodiment of the present disclosure, the sound source device may use the following formula to perform, based on the ambient noise, boosting and compensation on the audio test signal that needs to be played and is obtained from the other device:

$$I = \begin{cases} 0 & \text{for} & N < 50 \\ 0.3(N-50) & \text{for} & 50 \le N < 77 \\ 8.0 & \text{for} & N \ge 77 \end{cases}$$

where I the boosting and compensation amount (unit: dB) for the audio test signal that needs to be played and is obtained from the other device under the ambient noise, and N is a A-weighted long-term noise measured by the sound source device.

Furthermore, in an embodiment of the present disclosure, the terminal device under test may also play an audio test signal to the sound collection device at different wind speeds and different wind directions, so that the sound collection device (such as an artificial ear) collects signal data under the second test environment for different wind speeds and different wind directions, respectively, and sends the signal data under the second test environment to the test device, and accordingly the test device determines the impact of the wind noise at different wind speeds and different wind directions on the audio quality of the terminal device under test.

The second test environment may include:

applying the winds at the wind speeds and the wind directions to the terminal device under test via the wind generator;
playing the audio test signal to the sound collection device via the terminal device under test, and applying the winds at the wind speeds and the wind directions to the terminal device under test via the wind generator;
only playing the audio test signal to the sound collection device via the terminal device under test.

Based on this, the signal data under the second test environment may include:

pure noise signal data X2 collected by the sound collection device when only the winds are applied; audio test signal data Y2 under a noisy environment collected by the sound collection device when the audio test signal is played and the winds are applied; audio test signal data Z2 under a quiet environment collected by the sound collection device when only the audio test signal is played.

And, it should be noted that, in an embodiment of the present disclosure, the above-mentioned impact of the wind noise determined based on the signal data under the second test environment collected by the terminal device under test are mainly: an impact of the wind noise on the terminal device under test when the terminal device under test plays the audio signal in a case where the terminal device under test acts as a signal reception end.

Specifically, in an embodiment of the present disclosure, when the terminal device acts as a signal reception end, it usually needs to first receive an audio signal sent by a signal transmission end, and then play the audio signal. For example, when a user A is talking to a user B using his/her mobile phone A through the mobile phone B of the user B, if the user B is currently speaking, the mobile phone A is the signal reception end and the mobile phone B is the signal transmission end. The mobile phone B needs to first collect the sound emitted by the user B and form an audio signal, and send the audio signal to the signal reception end (i.e., the mobile phone A), so that mobile phone A plays the corresponding audio signal to the user A. Based on this, in the present disclosure, the scenario in which "the terminal device under test plays an audio test signal to the sound collection device at different wind speeds and different wind directions, so that the sound collection device collects signal data under the second test environment for different wind speeds and different wind directions, respectively" specifically simulates the scenario of playing the signal when the terminal device under test acts as a signal reception end. Therefore, the impact of the wind noise determined based on the signal data under the second test environment collected by the terminal device under test should be: an impact of the wind noise on the terminal device under test when the terminal device under test plays the audio signal in a case where the terminal device under test acts as a signal reception end.

The following is an introduction to the connection relationships between the sound collection device, the wind generator, the sound source device, the terminal device under test, and the measuring device in the methods according to the embodiments of the present disclosure. FIG. 1b and FIG. 1c are schematic diagrams showing connection relationships between the various devices during wind noise measurement provided by the embodiments of the present disclosure. As shown in FIG. 1b and FIG. 1c, the wind generator, the sound source device, and the sound collection device may all be set towards the terminal device under test. The wind generator is used to apply winds at different speeds and different directions to the terminal device under test. The sound source device may play an audio test signal towards the terminal device under test. The sound collection device may collect the audio test signal played by the terminal device under test. In addition, the terminal device under test may be installed on a turntable or a support, a reference point of the terminal device under test may be on a central axis of the turntable or the support, and a main axis direction of the wind generator may be aligned with the reference point of the terminal device under test. The reference point of the terminal device under test may be any point of the terminal device under test, such as a center point of the terminal device under test. In addition, when testing the wind noise, the turntable or the support may be rotated as needed to adjust the angles between the terminal device under test and the wind generator, the sound source device, and the sound collection device. For example, horizontal angle(s) and vertical angle(s) between the terminal device under test and the wind generator, the sound source device, and the sound collection device may be adjusted. The wind direction during the test may be adjusted by adjusting the angle between the terminal device under test and the wind generator.

Further, referring to FIG. 1b and FIG. 1c, the terminal device under test may be connected to the test device to output signal data under a first test environment to the test device, and the sound collection device may also be connected to the test device to output signal data under a second test environment to the test device.

Also, it should be noted that the above FIG. 1b simulates a scenario in which "the terminal device under test directly performs audio signal interaction with other device(s)", and the above FIG. 1c simulates a scenario in which "the terminal device under test performs audio signal interaction with other device(s) as an external device, or the terminal device under test performs audio signal interaction with other device(s) through a communication system" (that is, a scenario in which the terminal device under test does not directly perform audio signal interaction with other device(s)).

It should also be noted that in an embodiment of the present disclosure, when wind noise is measured, the measurement environment should be as close as possible to the situation of the device in a real environment. For example, the measurement environment should be as close as possible to the acoustic situation and the wind noise situation in the real environment. Also, since the essence of the wind noise is a pressure fluctuation, when the wind generator applies winds to the terminal device under test during the measurement procedure, care should be taken to avoid damaging the terminal device under test due to reaching the overload point which may thus affects the subsequent measurement procedure.

In summary, in the wind noise measurement methods provided by the embodiments of the present disclosure, the terminal device under test collects signal data under the first test environment for different wind speeds and different wind directions, respectively, and sends the signal data under the first test environment to the test device, so that the test device determines the impact of the wind noise of winds at different wind speeds and different wind directions on the audio quality of the terminal device under test; or, the terminal device under test plays an audio test signal to the sound collection device at different wind speeds and different wind directions, so that the sound collection device collects signal data under the second test environment for different wind speeds and different wind directions, respectively; after the sound collection device collects the signal data under the second test environment, the signal data under the second test environment is sent to the test device, so that the test device determines the impact of the wind noise of winds at different wind speeds and different wind directions on the audio quality of the terminal device under test. It can be seen that the present disclosure provides a wind noise measurement method applicable for terminal device(s), and the method may be used to measure the impact of the wind noise on various types of terminal devices.

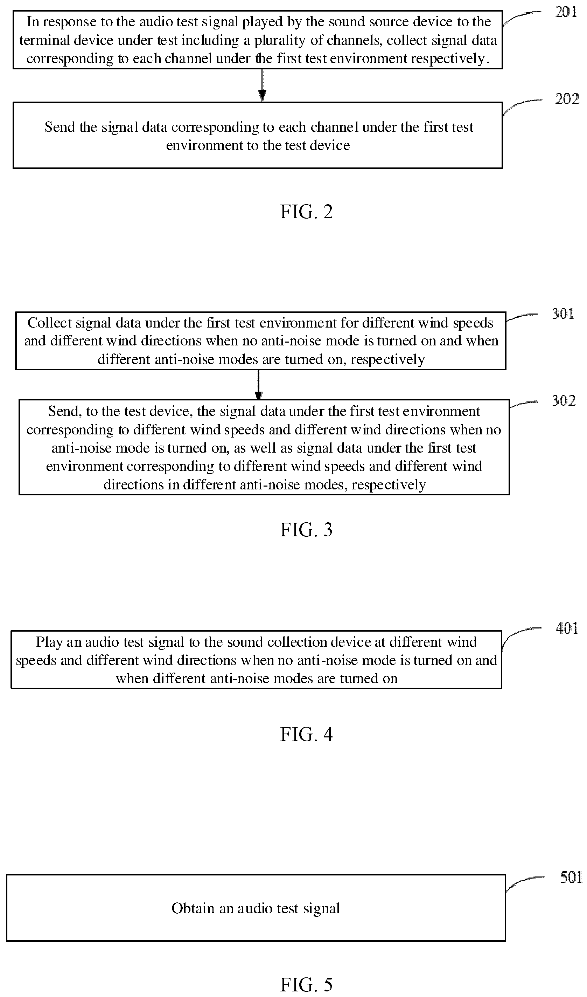

FIG. 2 is a schematic flowchart of a wind noise measurement method provided by an embodiment of the present disclosure. The method is performed by a terminal device under test. As shown in FIG. 2, the wind noise measurement method may include the following steps:

In step 201, in response to the audio test signal played by the sound source device to the terminal device under test including a plurality of channels, signal data corresponding to each channel under the first test environment is collected respectively.

In step 202, the signal data corresponding to each channel under the first test environment is sent to the test device.

In the embodiment of the present disclosure, the terminal device under test sends the signal data corresponding to each channel under the first test environment to the test device, so that the test device determines the impact of the wind noise of the winds at different wind speeds and different wind directions on the audio quality of each channel of the terminal device under test based on the signal data corresponding to each channel under the first test environment.

It can be seen from the above steps that the wind noise measurement method in the present disclosure may also be used to measure the impact of the wind noise of winds at different wind speeds and different wind directions on the multi-channel audio test signals of the terminal device under test, and thus the method has a wide range of applicability.

In summary, in the wind noise measurement methods provided by the embodiments of the present disclosure, the terminal device under test collects the signal data under the first test environment for different wind speeds and different wind directions, respectively, and sends the signal data under the first test environment to the test device, so that the test device determines the impact of the wind noise of winds at different wind speeds and different wind directions on the audio quality of the terminal device under test; or, the terminal device under test plays an audio test signal to the sound collection device at different wind speeds and different wind directions, so that the sound collection device collects the signal data under the second test environment for different wind speeds and different wind directions, respectively; after the sound collection device collects the signal data under the second test environment, the signal data under the second test environment is sent to the test device, so that the test device determines the impact of wind noise of winds at different wind speeds and different wind directions on the audio quality of the terminal device under test. It can be seen that the present disclosure provides a wind noise measurement method applicable for terminal device(s), and the method may be used to measure the impact of the wind noise on various types of terminal devices. In addition, the method of the present disclosure is also applicable for wind noise measurement for audio signals of a plurality of channels, and thus the method has a wide range of applicability.

FIG. 3 is a schematic flowchart of a wind noise measurement method provided by an embodiment of the present disclosure. The method is performed by a terminal device under test. As shown in FIG. 3, the wind noise measurement method may include the following steps:

In step 301, signal data under the first test environment for different wind speeds and different wind directions when no anti-noise mode is turned on and when different anti-noise modes are turned on, respectively, are collected.

In an embodiment of the present disclosure, the anti-noise mode may include a hardware anti-noise mode and/or a software anti-noise mode. The hardware anti-noise mode may include: providing windproof hardware (such as a windshield) for the terminal device under test. The software anti-noise mode may include: turning on software (such as a noise reduction algorithm) for resisting the wind noise for the terminal device under test.

In step 302, the signal data under the first test environment corresponding to different wind speeds and different wind directions when no anti-noise mode is turned on, as well as signal data under the first test environment corresponding to different wind speeds and different wind directions in different anti-noise modes, respectively, are sent to the test device.

In an embodiment of the present disclosure, the terminal device under test sends, to the test device, the corresponding signal data under the first test environment when no anti-noise mode is turned on, as well as the signal data under the first test environment corresponding to different anti-noise modes, respectively. Accordingly, the test device can determine the impact of the wind noise of winds at different wind speeds and different wind directions on the audio quality of the terminal device under test when no anti-noise mode is turned on, and can determine the impact of the wind noise of winds at different wind speeds and different wind directions on the audio quality of the terminal device under test when different anti-noise modes are turned on. By comparing the impact of the wind noise of winds at different wind speeds and different wind directions on the audio quality of the terminal device under test when different anti-noise modes are turned on and the impact of the wind noise of winds at different wind speeds and different wind directions on the audio quality of the terminal device under test when no anti-noise mode is turned on, the anti-noise effect of each anti-noise mode is determined. That is, the anti-noise effect of each anti-noise mode when the terminal device under test collects the audio signal(s) is determined.

In summary, in the wind noise measurement methods provided by the embodiments of the present disclosure, the terminal device under test collects the signal data under the first test environment for different wind speeds and different wind directions, respectively, and sends the signal data under the first test environment to the test device, so that the test device determines the impact of the wind noise of winds at different wind speeds and different wind directions on the audio quality of the terminal device under test; or, the terminal device under test plays an audio test signal to the sound collection device at different wind speeds and different wind directions, so that the sound collection device collects signal data under the second test environment for different wind speeds and different wind directions, respectively; after the sound collection device collects the signal data under the second test environment, the signal data under the second test environment is sent to the test device, so that the test device determines the impact of the wind noise of winds at different wind speeds and different wind directions on the audio quality of the terminal device under test. It can be seen that the present disclosure provides a wind noise measurement method applicable for terminal device(s), and the method may be used to measure the impact of the wind noise on various types of terminal devices.

FIG. 4 is a schematic flowchart of a wind noise measurement method provided by an embodiment of the present disclosure. The method is performed by a terminal device under test. As shown in FIG. 4, the wind noise measurement method may include the following step:

In step 401, an audio test signal is played to the sound collection device at different wind speeds and different wind directions when no anti-noise mode is turned on and when different anti-noise modes are turned on.

In an embodiment of the present disclosure, the terminal device under test plays the audio test signal to the sound collection device at different wind speeds and different wind directions respectively when no anti-noise mode is turned on and when different anti-noise modes are turned on, so that the sound collection device can collect the signal data under the second test environment for different wind speeds and different wind directions respectively when no anti-noise mode is turned on and when different anti-noise modes are turned on, and sends the corresponding signal data under the second test environment when no anti-noise mode is turned on and the signal data under the second test environment corresponding to different anti-noise modes to the test device. Accordingly, the test device can determine the anti-noise effect of each anti-noise mode based on the comparison and difference between the corresponding signal data under the second test environment when different anti-noise modes are turned on and the corresponding signal data under the second test environment when no anti-noise mode is turned on.

In summary, in the wind noise measurement method provided by the embodiments of the present disclosure, the terminal device under test collects the signal data under the first test environment for different wind speeds and different wind directions, respectively, and sends the signal data under the first test environment to the test device, so that the test device determines the impact of the wind noise of winds at different wind speeds and different wind directions on the audio quality of the terminal device under test; or, the terminal device under test plays the audio test signal to the sound collection device at different wind speeds and different wind directions, so that the sound collection device collects the signal data under the second test environment for different wind speeds and different wind directions; after the sound collection device collects the signal data under the second test environment, the signal data under the second test environment is sent to the test device, so that the test device determines the impact of the wind noise of winds at different wind speeds and different wind directions on the audio quality of the terminal device under test. It can be seen that the present disclosure provides a wind noise measurement method applicable for terminal device(s), and the method may be used to measure the impact of the wind noise on various types of terminal devices.

FIG. 5 is a schematic flowchart of a wind noise measurement method provided by an embodiment of the present disclosure. The method is performed by a terminal device under test. As shown in FIG. 5, the wind noise measurement method may include the following step:

In step 501, an audio test signal is obtained.

In an embodiment of the present disclosure, the terminal device under test usually needs to first obtain the audio test signal to be played from an other device, so that the terminal device under test can subsequently play the audio test signal to the sound collection device for subsequent procedures.

In summary, in the wind noise measurement method provided by the embodiments of the present disclosure, the terminal device under test collects the signal data under the first test environment for different wind speeds and different wind directions, respectively, and sends the signal data under the first test environment to the test device, so that the test device determines the impact of the wind noise of winds at different wind speeds and different wind directions on the audio quality of the terminal device under test; or, the terminal device under test plays the audio test signal to the sound collection device at different wind speeds and different wind directions, so that the sound collection device collects the signal data under the second test environment for different wind speeds and different wind directions, respectively; after the sound collection device collects the signal data under the second test environment, the signal data under the second test environment is sent to the test device, so that the test device determines the impact of the wind noise of winds at different wind speeds and different wind directions on the audio quality of the terminal device under test. It can be seen that the present disclosure provides a wind noise measurement method applicable for terminal device(s), and the method may be used to measure the impact of the wind noise on various types of terminal devices.

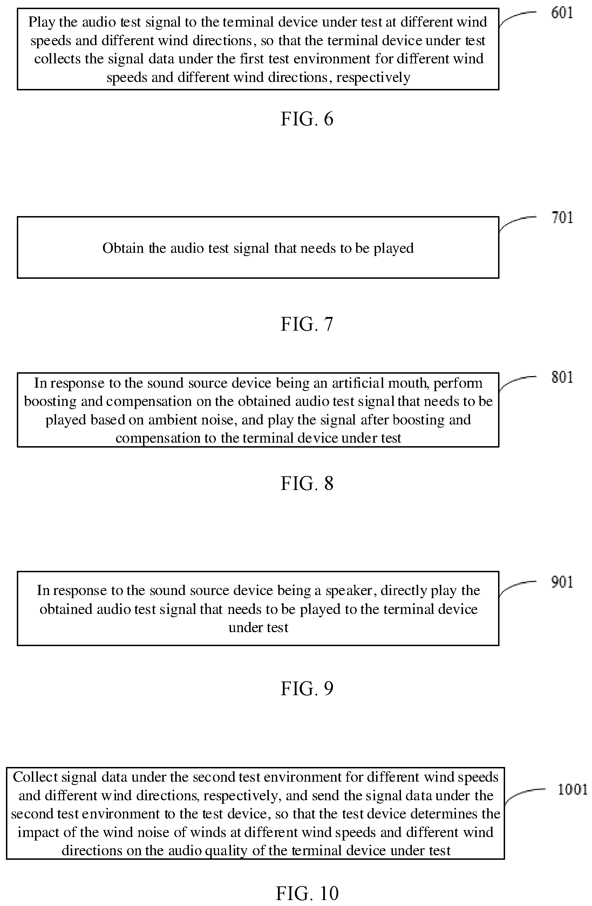

FIG. 6 is a schematic flowchart of a wind noise measurement method provided by an embodiment of the present disclosure. The method is performed by a sound source device. As shown in FIG. 6, the wind noise measurement method may include the following step:

In step 601, the audio test signal is played to the terminal device under test at different wind speeds and different wind directions, so that the terminal device under test collects the signal data under the first test environment for different wind speeds and different wind directions, respectively.

For a detailed description of step 601, reference may be made to the descriptions of the above embodiments.

In summary, in the wind noise measurement method provided by the embodiments of the present disclosure, the sound source device plays the audio test signal to the terminal device under test at different wind speeds and different wind directions, so that the terminal device under test collects the signal data under the first test environment for different wind speeds and different wind directions, respectively, and sends the signal data under the first test environment to the test device. Accordingly, the test device determines the impact of the wind noise of winds at different wind speeds and different wind directions on the audio quality of the terminal device under test. It can be seen that the present disclosure provides a wind noise measurement method applicable for terminal device(s), and the method may be used to measure the impact of the wind noise on various types of terminal devices.

FIG. 7 is a schematic flowchart of a wind noise measurement method provided by an embodiment of the present disclosure. The method is performed by a sound source device. As shown in FIG. 7, the wind noise measurement method may include the following step:

In step 701, the audio test signal that needs to be played is obtained.

In an embodiment of the present disclosure, the sound source device usually needs to first obtain the audio test signal that needs to be played from an other device, so that the sound source device can subsequently play the audio test signal to the terminal device under test for subsequent procedures.

In summary, in the wind noise measurement method provided by the embodiments of the present disclosure, the sound source device plays the audio test signal to the terminal device under test at different wind speeds and different wind directions, so that the terminal device under test collects the signal data under the first test environment for different wind speeds and different wind directions, respectively, and sends the signal data under the first test environment to the test device. Accordingly, the test device determines the impact of the wind noise of winds at different wind speeds and different wind directions on the audio quality of the terminal device under test. It can be seen that the present disclosure provides a wind noise measurement method applicable for terminal device(s), and the method may be used to measure the impact of the wind noise on various types of terminal devices.

FIG. 8 is a schematic flowchart of a wind noise measurement method provided by an embodiment of the present disclosure. The method is performed by a sound source device. As shown in FIG. 8, the wind noise measurement method may include the following step:

In step 801, in response to the sound source device being an artificial mouth, boosting and compensation are performed on the obtained audio test signal that needs to be played based on ambient noise, and the signal after boosting and compensation is played to the terminal device under test.

For a detailed description of step 801, reference may be made to the descriptions of the above embodiments.

In summary, in the wind noise measurement method provided by the embodiments of the present disclosure, the sound source device plays the audio test signal to the terminal device under test at different wind speeds and different wind directions, so that the terminal device under test collects the signal data under the first test environment for different wind speeds and different wind directions, respectively, and sends the signal data under the first test environment to the test device. Accordingly, the test device determines the impact of the wind noise of winds at different wind speeds and different wind directions on the audio quality of the terminal device under test. It can be seen that the present disclosure provides a wind noise measurement method applicable for terminal device(s), and the method may be used to measure the impact of the wind noise on various types of terminal devices.

FIG. 9 is a schematic flowchart of a wind noise measurement method provided by an embodiment of the present disclosure. The method is performed by a sound source device. As shown in FIG. 9, the wind noise measurement method may include the following step:

In step 901, in response to the sound source device being a speaker, the obtained audio test signal that needs to be played is directly played to the terminal device under test.

For a detailed description of step 901, reference may be made to the descriptions of the above embodiments.

In summary, in the wind noise measurement method provided by the embodiments of the present disclosure, the sound source device plays the audio test signal to the terminal device under test at different wind speeds and different wind directions, so that the terminal device under test collects the signal data under the first test environment for different wind speeds and different wind directions, respectively, and sends the signal data under the first test environment to the test device. Accordingly, the test device determines the impact of the wind noise of winds at different wind speeds and different wind directions on the audio quality of the terminal device under test. It can be seen that the present disclosure provides a wind noise measurement method applicable for terminal device(s), and the method may be used to measure the impact of the wind noise on various types of terminal devices.

FIG. 10 is a schematic flowchart of a wind noise measurement method provided by an embodiment of the present disclosure. The method is performed by a sound collection device. As shown in FIG. 10, the wind noise measurement method may include the following step:

In step 1001, signal data under the second test environment is collected for different wind speeds and different wind directions, respectively, and the signal data under the second test environment is sent to the test device, so that the test device determines the impact of the wind noise of winds at different wind speeds and different wind directions on the audio quality of the terminal device under test.

For a detailed description of step 1001, reference may be made to the descriptions of the above embodiments.

In summary, in the wind noise measurement method provided by the embodiments of the present disclosure, the sound collection device collects the signal data under the second test environment for different wind speeds and different wind directions, respectively, and sends the signal data under the second test environment to the test device, so that the test device determines the impact of the wind noise of winds at different wind speeds and different wind directions on the audio quality of the terminal device under test. It can be seen that the present disclosure provides a wind noise measurement method applicable for terminal device(s), and the method may be used to measure the impact of the wind noise on various types of terminal devices.

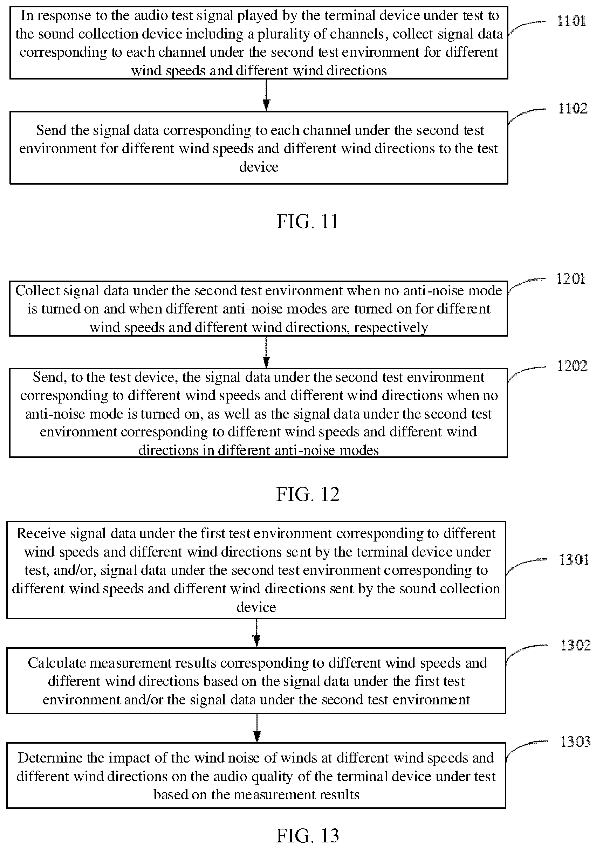

FIG. 11 is a schematic flowchart of a wind noise measurement method provided by an embodiment of the present disclosure. The method is performed by a sound collection device. As shown in FIG. 11, the wind noise measurement method may include the following steps:

In step 1101, in response to the audio test signal played by the terminal device under test to the sound collection device including a plurality of channels, signal data corresponding to each channel under the second test environment is collected for different wind speeds and different wind directions.

In step 1102, the signal data corresponding to each channel under the second test environment for different wind speeds and different wind directions is sent to the test device.

In an embodiment of the present disclosure, the sound collection device sends the signal data corresponding to each channel under the second test environment to the test device, so that the test device determines the impact of the wind noise of winds at different wind speeds and different wind directions on the multi-channel audio quality of the terminal device under test based on the signal data corresponding to each channel under the second test environment. Therefore, the wind noise measurement method in the present disclosure can also be applicable to wind noise measurement for multi-channel audio signal(s), and the method has a wide range of applicability.

In summary, in the wind noise measurement method provided by the embodiments of the present disclosure, the sound collection device collects the signal data under the second test environment for different wind speeds and different wind directions, respectively, and send the signal data under the second test environment to the test device, so that the test device determines the impact of the wind noise of winds at different wind speeds and different wind directions on the audio quality of the terminal device under test. It can be seen that the present disclosure provides a wind noise measurement method applicable to terminal device(s), and the method may be used to measure the impact of the wind noise on various types of terminal devices. In addition, the method of the present disclosure is also applicable to wind noise measurement for multi-channel audio signal(s), and thus the method has a wide range of applicability.

FIG. 12 is a schematic flowchart of a wind noise measurement method provided by an embodiment of the present disclosure. The method is performed by a sound collection device. As shown in FIG. 12, the wind noise measurement method may include the following steps:

In step 1201, signal data under the second test environment when no anti-noise mode is turned on and when different anti-noise modes are turned on is collected for different wind speeds and different wind directions, respectively.

In step 1202, the signal data under the second test environment corresponding to different wind speeds and different wind directions when no anti-noise mode is turned on, as well as the signal data under the second test environment corresponding to different wind speeds and different wind directions in different anti-noise modes, are sent to the test device.

In an embodiment of the present disclosure, the sound collection device sends, to the test device, corresponding signal data under the second test environment when no anti-noise mode is turned on, as well as the signal data under the second test environment corresponding to different anti-noise modes, respectively. Accordingly, the test device can determine the anti-noise effect of each anti-noise mode based on the corresponding signal data under the second test environment when different anti-noise modes are turned on and the corresponding signal data under the second test environment when no anti-noise mode is turned on. That is, the test device determines the anti-noise effect of each anti-noise mode when the terminal device under test plays the audio signal.

In summary, in the wind noise measurement method provided by the embodiments of the present disclosure, the sound collection device collects the signal data under the second test environment for different wind speeds and different wind directions, respectively, and sends the signal data under the second test environment to the test device, so that the test device determines the impact of the wind noise of winds at different wind speeds and different wind directions on the audio quality of the terminal device under test. It can be seen that the present disclosure provides a wind noise measurement method applicable for terminal device(s), and the method may be used to measure the impact of the wind noise on various types of terminal devices.

FIG. 13 is a schematic flowchart of a wind noise measurement method provided by an embodiment of the present disclosure. The method is performed by a test device. As shown in FIG. 13, the wind noise measurement method may include the following steps:

In step 1301, signal data under the first test environment corresponding to different wind speeds and different wind directions sent by the terminal device under test, and/or, signal data under the second test environment corresponding to different wind speeds and different wind directions sent by the sound collection device, is(are) received.

For a detailed description of step 1301, reference may be made to the above embodiments.

In step 1302, measurement results corresponding to different wind speeds and different wind directions are calculated based on the signal data under the first test environment and/or the signal data under the second test environment.

In an embodiment of the present disclosure, the measurement result may include at least one of:

a directional response of wind noise;
a wind noise overload point;
a wind noise distortion rate; or
a signal quality parameter used to evaluate a communication signal of the terminal device under test.

Specifically, in an embodiment of the present disclosure, the above-mentioned "a directional response of wind noise" is mainly used to evaluate the wind noise characteristics of a device under different wind directions and different wind speeds. In response to the terminal device under test being a signal transmission end, the directional response of the wind noise may be: an audio signal sent by the terminal device under test to a signal reception end after the terminal device under test collects the audio signal;

in response to the terminal device under test being a signal reception end, the directional response of the wind noise may be: an audio signal collected by a sound collection side after the terminal device under test plays a received audio signal. The sound collection side may be an artificial ear or a device for collecting sound.

The above-mentioned "wind noise overload point" is mainly the maximum wind speed at different directions at which a device can work normally for a long time (work in a linear area). When a clip occurs in a signal or a peak signal is reached, it may be considered that the wind noise overload point is reached.

The above-mentioned "wind noise distortion rate" is used to indicate a proportion of distorted signals and to evaluate the degree of wind noise distortion. Since the impact of the wind noise is unstable, the distortion caused by the wind noise appears intermittently. The higher the wind speed, the more frequent the distortion will appear. Based on this, the wind noise distortion rate is calculated in the present disclosure to evaluate the degree of wind noise distortion.

The above-mentioned "signal quality parameter" may include at least one of:

> a Signal-to-Noise Ratio (SNR);
> a Signal-to-Distortion Ratio (SDR);
> a Source-to-artifact Ratio (SAR);
> a Short-Time Objective Intelligibility (STOI); or
> a Perceptual Evaluation of Speech Quality (PESQ).

It should be noted that the present disclosure does not specifically limit the specific calculation method of "calculating the measurement results corresponding to different wind speeds and different wind directions based on the signal data under the first test environment and/or the signal data under the second test environment", and any calculation method for obtaining the above measurement results falls within the protection scope of the present disclosure.

In step 1303, the impact of the wind noise of winds at different wind speeds and different wind directions on the audio quality of the terminal device under test is determined based on the measurement results.

Specifically, in an embodiment of the present disclosure, the method for determining the impact of the wind noise of different wind speeds and different wind directions on the audio quality of the terminal device under test based on the measurement results may include any one or more of the following:

First: for different wind speeds, the lowest signal quality parameter corresponding to all wind directions is used to represent the communication quality of the terminal device under test at a corresponding wind speed.

For example, for a wind speed of 3 m/s, measurement results are obtained for three different wind directions. The three wind directions are wind direction 1, wind direction 2, and wind direction 2, respectively. It is assumed that a SNR value in the measurement result corresponding to wind direction 1 is smaller than a SNR value in the measurement result corresponding to wind direction 3, which is smaller than the SNR value in the measurement result corresponding to wind direction 2. That is, for the wind speed of 3 m/s, the lowest SNR value corresponding to all wind directions is the SNR value in the measurement result corresponding to wind direction 2. In this case, the SNR value in the measurement result corresponding to wind direction 2 may be used to represent the SNR communication quality of the terminal device under test at the corresponding wind speed.

Second: for each wind direction, a maximum wind speed corresponding to all measurement results that meet a preset condition among measurement results corresponding to the wind direction is determined as a maximum wind speed that is supportable under the wind direction, and a minimum wind speed among maximum wind speeds that are supportable under all wind directions is determined as a maximum wind speed that is supportable by the terminal device under test.

The preset condition may be flexibly set according to different stages of the test and different requirements. For example, the preset condition may be that the wind noise distortion rate is lower than a specific value.

For example, it is assumed that the measurement results that meet the preset condition for wind direction 1 are: a measurement result corresponding to a wind speed 1 m/s, and a measurement result corresponding to a wind speed 3 m/s. In this case, it may be determined that the maximum wind speed that is supportable under wind direction 1 is: 3 m/s. Similarly, it is assumed that the maximum wind speed that is supportable under wind direction 2 is: 4 m/s, and the maximum wind speed that is supportable under wind direction 3 is: 2 m/s. The minimum wind speed among the maximum wind speeds that are supportable under all wind directions (i.e. wind direction 1 to wind direction 3) is 2 m/s. Thus, it may be determined that the maximum wind speed that is supportable by the terminal device under test is 2 m/s.

Third: a wind speed corresponding to the minimum wind noise overload point corresponding to all wind directions is determined as the maximum wind speed that is supportable by the terminal device under test when the terminal device under test collects an ambient sound.

In an embodiment of the present disclosure, the wind noise overload point may be understood as the maximum wind speed at which distortion occurs, and each wind direction corresponds to a wind noise overload point. Based on this, the present disclosure determines the wind speed corresponding to the minimum wind noise overload point in all wind directions as the maximum wind speed that is supportable by the terminal device under test when the terminal device under test collects an ambient sound.

For example, it is assumed that, according to calculations of the measuring device, for the wind direction 1, the wind noise overload point occurs when the wind speed is 3 m/s, and the wind noise overload point corresponding to the wind direction 1 is: a first value. For the wind direction 2, the wind noise overload point occurs when the wind speed is 5 m/s, and the wind noise overload point corresponding to the wind direction 2 is: a second value. For the wind direction 3, the wind noise overload point occurs when the wind speed is 4 m/s, and the wind noise overload point corresponding to the wind direction 3 is: a third value. The first value is smaller than the third value and smaller than the second value, and it may be determined that the wind noise overload point corresponding to the wind direction 1 is the minimum wind noise overload point corresponding to all wind directions. In this case, the wind speed corresponding to the wind noise overload point corresponding to the wind direction 1 may be determined as the maximum wind speed that is supportable by the terminal device under test when the terminal device under test collects an ambient sound. That is, the maximum wind speed that is supportable by the terminal device under test when the terminal device under test collects an ambient sound is 3 m/s.

And, in an embodiment of the present disclosure, the maximum wind speed that is supportable by the terminal device under test when the terminal device under test collects an ambient sound means: when the terminal device under test collects an ambient sound at a wind speed smaller than or equal to the maximum wind speed that is supportable, it may be guaranteed that no distortion occurs. Based on this, the wind speed and wind direction scenario applicable to the normal operation of the terminal device under test may be determined based on the maximum wind speed that is supportable.

In summary, in the wind noise measurement method provided by the embodiments of the present disclosure, the measuring device receives the signal data under the first test environment corresponding to different wind speeds and different wind directions sent by the terminal device under test, and/or the signal data under the second test environment corresponding to different wind speeds and different wind directions sent by the sound collection device. Then, the measuring device calculates the measurement results corresponding to different wind speeds and different wind directions based on the signal data under the first test environment and/or the signal data under the second test environment, and determines the impact of the wind noise of winds at different wind speeds and different wind directions on the audio quality of the terminal device under test based on the measurement results. It can be seen that the present disclosure provides a wind noise measurement method applicable for terminal device(s), and the method may be used to measure the impact of the wind noise on various types of terminal devices.

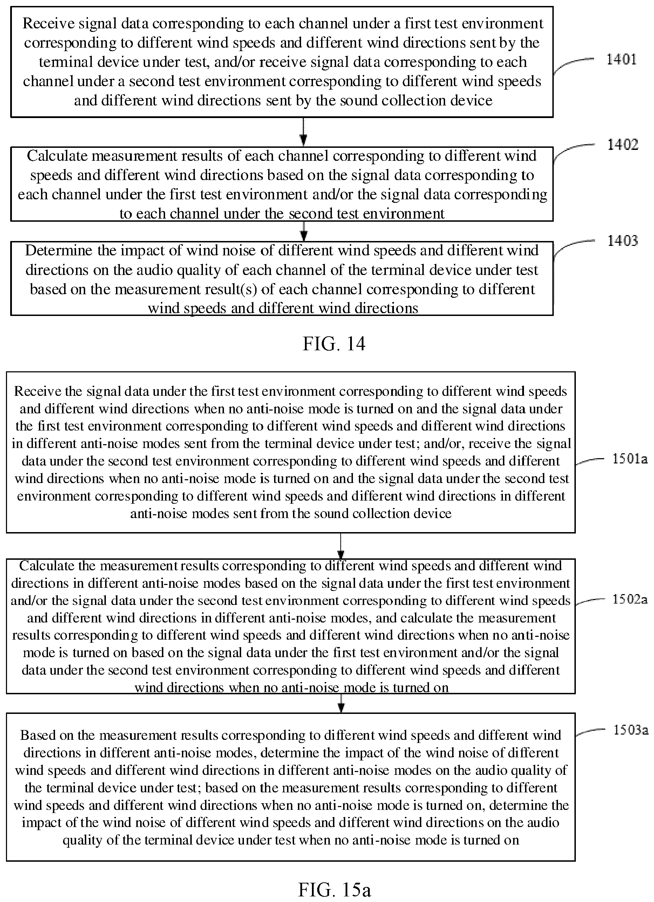

FIG. 14 is a schematic flowchart of a wind noise measurement method provided by an embodiment of the present disclosure. The method is performed by a test device. As shown in FIG. 14, the wind noise measurement method may include the following steps:

In step 1401, the signal data corresponding to each channel under the first test environment corresponding to different wind speeds and different wind directions sent by the terminal device under test is received, and/or, the signal data corresponding to each channel under the second test environment corresponding to different wind speeds and different wind directions sent by the sound collection device is received.

In step 1402, a measurement result for each channel corresponding to different wind speeds and different wind directions is calculated based on the signal data corresponding to each channel under the first test environment and/or the signal data corresponding to each channel under the second test environment.

In step 1403, the impact of the wind noise of different wind speeds and different wind directions on the audio quality of each channel of the terminal device under test is determined based on the measurement result of each channel corresponding to different wind speeds and different wind directions.

For a detailed description of steps 1401 to 1403, reference may be made to the descriptions of the above embodiments.

In summary, in the wind noise measurement method provided by the embodiments of the present disclosure, the measuring device receives the signal data under the first test environment corresponding to different wind speeds and different wind directions sent by the terminal device under test, and/or the signal data under the second test environment corresponding to different wind speeds and different wind directions sent by the sound collection device. Then, the measuring device calculates the measurement results corresponding to different wind speeds and different wind directions based on the signal data under the first test environment and/or the signal data under the second test environment, and determines the impact of the wind noise of winds at different wind speeds and different wind directions on the audio quality of the terminal device under test based on the measurement results. It can be seen that the present disclosure provides a wind noise measurement method applicable to terminal device(s), and the method may be used to measure the impact of the wind noise on various types of terminal devices. In addition, the method of the present disclosure is also applicable to wind noise measurement for multi-channel audio signal(s), and thus the method has a wide range of applicability.

FIG. 15a is a schematic flowchart of a wind noise measurement method provided by an embodiment of the present disclosure. The method is performed by a test device. As shown in FIG. 15a, the wind noise measurement method may include the following steps:

In step 1501a, the signal data under the first test environment corresponding to different wind speeds and different wind directions when no anti-noise mode is turned on and the signal data under the first test environment corresponding to different wind speeds and different wind directions in different anti-noise modes sent from the terminal device under test are received; and/or, the signal data under the second test environment corresponding to different wind speeds and different wind directions when no anti-noise mode is turned on and the signal data under the second test environment corresponding to different wind speeds and different wind directions in different anti-noise modes sent from the sound collection device are received.

In step 1502a, the measurement results corresponding to different wind speeds and different wind directions in different anti-noise modes are calculated based on the signal data under the first test environment and/or the signal data under the second test environment corresponding to different wind speeds and different wind directions in different anti-noise modes, and the measurement results corresponding to different wind speeds and different wind directions when no anti-noise mode is turned on are calculated based on the signal data under the first test environment and/or the signal data under the second test environment corresponding to different wind speeds and different wind directions when no anti-noise mode is turned on.

In step 1503a, based on the measurement results corresponding to different wind speeds and different wind directions in different anti-noise modes, the impact of the wind noise of different wind speeds and different wind directions in different anti-noise modes on the audio quality of the terminal device under test are determined; based on the measurement results corresponding to different wind speeds and different wind directions when no anti-noise mode is turned on, the impact of the wind noise of different wind speeds and different wind directions on the audio quality of the terminal device under test when no anti-noise mode is turned on are determined.

For a detailed description of steps 1501a to 1503a, reference may be made to the descriptions of the above embodiments.

In summary, in the wind noise measurement method provided by the embodiments of the present disclosure, the measuring device receives the signal data under the first test environment corresponding to different wind speeds and different wind directions sent by the terminal device under test, and/or the signal data under the second test environment corresponding to different wind speeds and different wind directions sent by the sound collection device. Then, the measuring device calculates the measurement results corresponding to different wind speeds and different wind directions based on the signal data under the first test environment and/or the signal data under the second test environment, and determines the impact of the wind noise of winds at different wind speeds and different wind directions on the audio quality of the terminal device under test based on the measurement results. It can be seen that the present disclosure provides a wind noise measurement method applicable for terminal device(s), and the method may be used to measure the impact of the wind noise on various types of terminal devices.

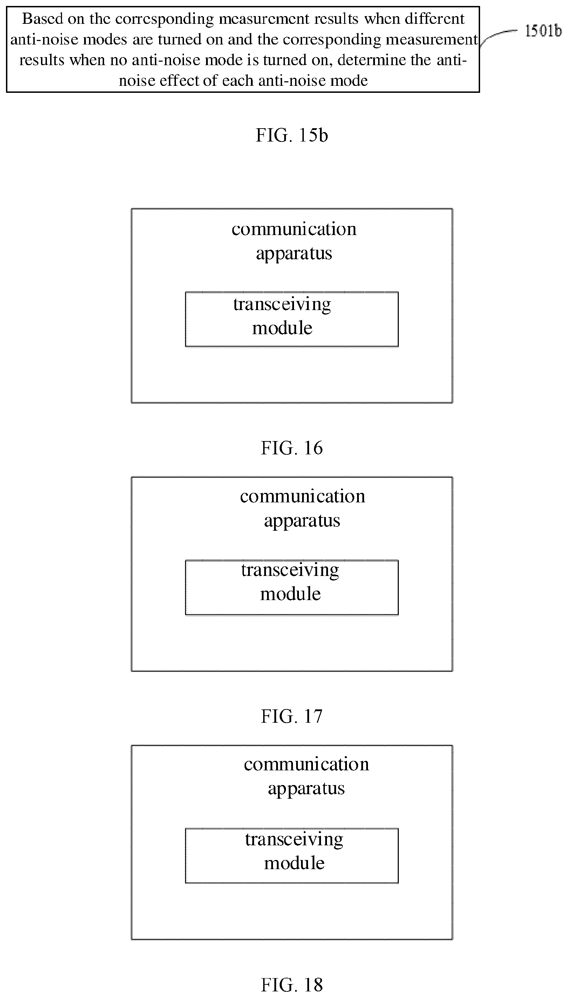

FIG. 15b is a schematic flowchart of a wind noise measurement method provided by an embodiment of the present disclosure. The method is performed by a test device. As shown in FIG. 15b, the wind noise measurement method may include the following step:

In step 1501b, based on the corresponding measurement results when different anti-noise modes are turned on and the corresponding measurement results when no anti-noise mode is turned on, the anti-noise effect of each anti-noise mode is determined.

Specifically, in an embodiment of the present disclosure, the anti-noise effects of different anti-noise modes may be determined by subtracting the corresponding measurement results when no anti-noise mode is turned on under the same condition from the corresponding measurement results when different anti-noise modes are turned on. The magnitude of the difference obtained by the subtraction may be used to evaluate the anti-noise effect of each anti-noise mode.

For example, it is assumed that for a wind speed of 3 m/s in the wind direction 1, when a hardware anti-noise mode is turned on, a measurement result of SNR obtained by calculation is $SNR_A$. For the wind speed of 3 m/s in the wind direction 1, when no anti-noise mode is turned on, a measurement result of SNR obtained by calculation is $SNR_B$. The SNR is obtained by subtracting $SNR_B$ from $SNR_A$, that is, SNR = $SNR_A$ - $SNR_B$. In this case, the SNR obtained by subtraction may be used to evaluate the anti-noise effect of the hardware anti-noise mode. If the SNR obtained by subtraction is a positive number, the larger the SNR obtained by subtraction, the better the anti-noise improvement of the hardware anti-noise mode. If the SNR obtained by subtraction is a negative number or 0, it means that the anti-noise improvement of the hardware anti-noise mode is poor.

It should be noted that the above only provides an example for the "hardware anti-noise mode", and the calculation method and principle of the "software anti-noise mode" are similar and will not be repeated here.

In summary, in the wind noise measurement method provided by the embodiments of the present disclosure, the measuring device receives the signal data under the first test environment corresponding to different wind speeds and different wind directions sent by the terminal device under test, and/or the signal data under the second test environment corresponding to different wind speeds and different wind directions sent by the sound collection device. Then, the measuring device calculates the measurement results corresponding to different wind speeds and different wind directions based on the signal data under the first test environment and/or the signal data under the second test environment, and determines the impact of the wind noise of winds at different wind speeds and different wind directions on the audio quality of the terminal device under test based on the measurement results. It can be seen that the present disclosure provides a wind noise measurement method application for terminal device(s), and the method may be used to measure the impact of the wind noise on various types of terminal devices.

The methods in the present disclosure will be described in detail below with examples.

Feature Interpretation

Equivalent sound pressure of a wind: an equivalent sound pressure (hereinafter referred to as wind noise) caused by a wind at a specified speed and direction to a microphone when there is no external sound field. The equivalent sound pressure should be a function of a wind direction $\theta$, a frequency f, a wind speed v. It is caused by the vortex of the system and the turbulence in the air.

Test environment requirements:

Test environment:
the test environment should be a free field.
Ambient noise:
the noise in the test environment should not affect a test result. The equivalent continuous sound pressure of 1/3 octave should be smaller than the NR10 curve.
Wind speed:
the wind speed in the test environment should be 0 m/s.
Room size: the room size is large enough relative to an air duct and a test device. It does not cause additional impact(s) on the airflow for testing.
Test device:

wind generator:
referring to the requirements of GB 12060.4-2012 IEC 60268-4, the wind generator should be a device with characteristics close to those of a natural wind and be able to work stably during the test.

The noise of the device should not affect the test result, and it can work stably at the wind speed required by the test.

The size of the air duct is large enough compared to the size of the device under test, and is sufficient to completely cover the turbulence generated near the device under test, so that the test environment and the natural wind environment are as consistent as possible, such as a radial fan for a short device or an axial fan for a long device recommended in GB 12060.4-2012 IEC 60268-4.

The specific parameters of the wind generator used need to be stated in a test report.

Turntable:
in order to ensure the accuracy of the test and the volume of the wind generator, it is recommended that the device under test be installed on a turntable to facilitate adjustment of the wind direction for the test.

The angles of the wind generator and the device under test may also be adjusted according to actual conditions.

Artificial Head

During the measurement, the device is installed at a position corresponding to the artificial head according to the actual use situation, simulating the acoustic environment and wind noise situation in actual use.

Test Sound Source

an artificial mouth:
for a device with human voice as an input source, a standard artificial mouth at a corresponding test position is used to play the test signal instead of the artificial mouth;
a test speaker:
for a device that does not use human voice as an input source, a standard coaxial test sound box at the corresponding test position is used to play the test signal instead of the artificial mouth.

Device Under Test:
The present disclosure is applicable to the following device(s) or mode(s) including but not limited to: head-mounted, hands-free, handheld.

In order to simulate the situation of a device in a real environment, the device needs to be tested under the situation of simulating a real scenario, including the impact of a human body, an external component, and a support. A reference point of the device under test should be selected according to the actual use situation.

For modes with different hardware settings (windshield) and software settings (noise reduction algorithm), measurement should be made separately to evaluate wind noises in different modes.

The present disclosure is applicable to a test of the audio of the device under test itself;

the present disclosure is also applicable to testing the device under test as an external device or in a communication system;

Measurement method

Test Setup

According to an actual applicable scenario, the device is installed at the corresponding position of the artificial head or the support, and the terminal device, the artificial head and support are regarded as a device under test as a whole. This is used to simulate the impact of a human body or other object(s) on the terminal device in real situations.

Test Signal Loudness

The artificial mouth should be calibrated at the MRP according to relevant standards such as [ITU-T P.340]. The parameters of equalization and loudness may be found in [ITU-T P.581].

Since wind noise related test is performed in a noisy environment, the test signal needs to be compensated to account for the ambient noise according to the Lombard effect.

Test Angle

According to actual use situations, wind directions with different horizontal and vertical angles are selected for testing.

Transmission End

1) The device under test should be installed on the turntable, the device reference point is on a vertical line of the center of the turntable, and the main axis direction of the wind generator is aligned with the center of the device under test. The horizontal angle between the wind generator and the device is φ, and the vertical angle is θ.
2-5) are repeated at different horizontal and vertical angles.
2) A wind of a specified speed v is applied to the device under test. The wind speed at the device under test should remain stable.
3) Pure noise data X collected by the device under test in a stable situation is recorded, and the artificial ear records the ambient noise during the test.
4) The artificial mouth plays a test signal with a corresponding loudness according to the ambient noise, and noisy signal data Y collected by the device under test in a stable situation is recorded.
5) The wind generator is turn off, and the artificial mouth plays the test signal with the corresponding loudness according to the ambient noise, and test signal data Z collected by the device under test under a quiet environment in a stable situation is recorded.

The above experiment is repeated by changing the wind speed.

Reception End

1) The device under test should be installed on the turntable, the device reference point is on the vertical line of the center of the turntable, and the main axis direction of the wind generator is aligned with the center of the device. The horizontal angle between the wind generator and the device is φ, and the vertical angle is θ.
2-5) are repeated at different horizontal and vertical angles.
2) A wind of a specified speed v is applied to the device under test. The wind speed at the device under test should remain stable.
3) A noise X recorded by the artificial ear in a stable situation is recorded.
4) The device under test plays the test signal in a corresponding mode, and the artificial ear records the test signal in the noisy environment as Y.
5) The wind generator is turned off, and the device under test plays the test signal according to the noise X, and the artificial ear records the test signal in a quiet environment as Z.

The above experiment is repeated by changing the wind speed.

Note 1: the essence of the wind noise is a pressure fluctuation, and care should be taken to avoid damaging the device due to the device reaching an overload point, which may affect subsequent experiments.

Test results:
The test result(s) should include the following data:

a directional response of the wind noise;
the directional response of the wind noise is an output signal of the device under test at different wind directions and different wind speeds. It is an output of the device which is a function of a wind direction θ, a wind speed v, a frequency f.

For evaluating the wind noise characteristics of the device at different wind directions and wind speeds;
Wind noise overload point:
the wind noise overload point should be the maximum wind speed in different directions at which the device can work normally for a long time (working in the linear area).

The wind noise overload point is considered to be reached when there is a clip in a signal or a peak signal is reached.

Wind noise distortion rate:

The signal in the microphone is unstable due to the wind noise, the distortion caused by wind noise appears intermittently, and the higher the wind speed, the more frequent the distortion will appear.

Therefore, the present disclosure proposes to calculate the proportion of a distorted signal in the signals as a parameter for evaluating the degree of wind noise distortion.

Relevant parameter(s) for evaluating the signal quality:

Signal quality related parameters (such as SNR, SDR, SAR, STOI, PESQ) should be calculated at different wind directions θ and wind speeds v.

Through the noises X in different scenarios, the test signal Z in the quiet environment, and the test signal Y in a noisy environment, relevant parameters are calculated.

For multi-channel audio applications:

for audio outputting a plurality of channels, the calculation should be performed for each channel of the output.

When evaluating the directional response of the wind noise of the device and parameters related to the signal quality, the multi-channel signal obtained by the test method may also be converted into a mono signal according to a related method, to facilitate the evaluation of related parameters.

Test Conclusion:

The test should include different modes in which the terminal needs to be tested, including hardware settings (with or without a windshield), software settings (related noise reduction algorithm). Tests in different modes are conducted separately.

    1) Absolute parameter(s)

        1. When evaluating the signal quality of the device, a parameter with the lowest signal quality in all directions at a corresponding wind speed should be selected as the conclusion.
        2. When evaluating a wind speed scenario that can be supported by the device, the maximum wind speed that meets a condition at all angles and all channels should be selected as the conclusion. For the judgment criteria, reference should be made to relevant standards and the judgment criteria should be formulated according to the actual situations of different stages and different functions of the device.
        3. When evaluating the wind speed supported by the device for collecting an ambient sound, the minimum value of the wind noise overload point at all angles and all channels is selected as the conclusion to ensure that no distortion occurs in the device at this wind speed.

    2) Evaluate the improvement effect

When evaluating the effect of the software and hardware settings, under the situation that there are no other variables, the conclusion is made by subtracting the relevant parameter B measured by turning off a relevant setting from the parameter A measured by turning on the relevant setting.

For example, when evaluating the effect of a windshield on SNR:

Key points of the technical solutions of the present disclosure

The present disclosure proposes a method for measuring the impact of the wind on the audio service quality of a terminal device. The method is used to measure the impact of the wind on the device at different directions and different wind speeds, so as to obtain the signal quality of the device at different wind speeds and the wind speed scenario that the device can support, and multi-channel and mono-channel devices are used, and a method for evaluating the relevant noise reduction effect is disclosed.

FIG. 16 is a schematic diagram of a structure of a communication apparatus provided by an embodiment of the present disclosure. As shown in FIG. 16, the apparatus may include:

    a transceiving module configured to collect signal data under a first test environment for different wind speeds and different wind directions, respectively, and send the signal data under the first test environment to a test device, so that the test device determines an impact of wind noise of winds at different wind speeds and different wind directions on an audio quality of a terminal device under test; or the transceiving module is further configured to play an audio test signal to a sound collection device at different wind speeds and different wind directions, so that the sound collection device collects signal data under a second test environment for different wind speeds and different wind directions, respectively.

In summary, in the communication apparatus provided by the embodiment of the present disclosure, the terminal device under test collects the signal data under the first test environment for different wind speeds and different wind directions, respectively, and sends the signal data under the first test environment to the test device, so that the test device determines the impact of the wind noise of winds at different wind speeds and different wind directions on the audio quality of the terminal device under test; or, the terminal device under test plays the audio test signal to the sound collection device at different wind speeds and different wind directions, so that the sound collection device collects the signal data under the second test environment for different wind speeds and different wind directions, respectively; after the sound collection device collects the signal data under the second test environment, the signal data under the second test environment is sent to the test device, so that the test device determines the impact of the wind noise of winds at different wind speeds and different wind directions on the audio quality of the terminal device under test. It can be seen that the present disclosure provides a wind noise measurement method applicable for terminal device(s), and the method may be used to measure the impact of the wind noise on various types of terminal devices.

Optionally, in an embodiment of the present disclosure, the first test environment includes:

only applying the winds at the wind speeds and the wind directions to the terminal device under test via a wind generator;
playing the audio test signal to the terminal device under test via a sound source device, and applying the winds at the wind speeds and the wind directions to the terminal device under test via the wind generator;
only playing the audio test signal to the terminal device under test via the sound source device.

Optionally, in an embodiment of the present disclosure, the signal data under the first test environment includes:

pure noise signal data X1 collected by the terminal device under test when only the winds are applied;
audio test signal data Y1 under a noisy environment collected by the terminal device under test when the audio test signal is played and the winds are applied;
audio test signal data Z1 under a quiet environment collected by the terminal device under test when only the audio test signal is played.

Optionally, in an embodiment of the present disclosure, the transceiving module is further configured to:
in response to the audio test signal played by the sound source device to the terminal device under test including a plurality of channels, collect signal data corresponding to each channel under the first test environment respectively.

Optionally, in an embodiment of the present disclosure, the transceiving module is further configured to:
send the signal data corresponding to each channel under the first test environment to the test device.

Optionally, in an embodiment of the present disclosure, the sound source device includes at least one of:

an artificial mouth; or
a speaker.

Optionally, in an embodiment of the present disclosure, the audio test signal played by the sound source device to the terminal device under test is determined by the sound source device based on an audio test signal that is obtained from an other device and needs to be played;

in response to the sound source device being a speaker, the audio test signal played by the sound source device to the terminal device under test is: an audio test signal that is obtained by the sound source device from the other device and needs to be played;
in response to the sound source device being an artificial mouth, the audio test signal played by the sound source device to the terminal device under test is: a signal obtained by the sound source device after performing, based on ambient noise, boosting and compensation on an audio test signal that is obtained from the other device and needs to be played.

Optionally, in an embodiment of the present disclosure, the transceiving module is further configured to:
collect the signal data under the first test environment when no anti-noise mode is turned on and when different anti-noise modes are turned on, respectively.

Optionally, in an embodiment of the present disclosure, the transceiving module is further configured to:
send, to the test device, corresponding signal data under the first test environment when no anti-noise mode is turned on and the signal data under the first test environment corresponding to different anti-noise modes.

Optionally, in an embodiment of the present disclosure, the transceiving module is further configured to:
play the audio test signal to the sound collection device when no anti-noise mode is turned on and when different anti-noise modes are turned on, respectively.

Optionally, in an embodiment of the present disclosure, the apparatus is further configured to:
obtain the audio test signal.

FIG. 17 is a schematic diagram of a structure of a communication apparatus provided by an embodiment of the present disclosure. As shown in FIG. 17, the apparatus may include:
a transceiving module configured to play an audio test signal to a terminal device under test at different wind speeds and different wind directions, so that the terminal device under test collects signal data under a first test environment for different wind speeds and different wind directions, respectively.

In summary, in the communication apparatus provided in the embodiment of the present disclosure, the sound source device plays the audio test signal to the terminal device under test at different wind speeds and different wind directions, so that the terminal device under test collects the signal data under the first test environment for different wind speeds and different wind directions, respectively, and sends the signal data under the first test environment to the test device. Accordingly, the test device determines the wind noise impact of winds at different wind speeds and different wind directions on the audio quality of the terminal device under test. It can be seen that the present disclosure provides a wind noise measurement method applicable for terminal device(s), and the method may be used to measure the impact of the wind noise on various types of terminal devices.

Optionally, in an embodiment of the present disclosure, the apparatus is further configured to:
obtain the audio test signal that needs to be played.

Optionally, in an embodiment of the present disclosure, the sound source device includes at least one of:

> an artificial mouth; or
> a speaker.

Optionally, in an embodiment of the present disclosure, in response to the sound source device being the artificial mouth, the transceiving module is further configured to:

> perform, based on ambient noise, boosting and compensation on the obtained audio test signal that needs to be played, and play the signal after boosting and compensation to the terminal device under test;
> in response to the sound source device being the speaker, the transceiving module is further configured to:
> directly play the obtained audio test signal that needs to be played to the terminal device under test.

FIG. 18 is a schematic diagram of a structure of a communication apparatus provided by an embodiment of the present disclosure. As shown in FIG. 18, the apparatus may include:
a transceiving module configured to collect signal data under a second test environment for different wind speeds and different wind directions, respectively, and send the signal data under the second test environment to a test device, so that the test device determines the impact of the wind noise of winds at different wind speeds and different wind directions on an audio quality of a terminal device under test.

In summary, in the communication apparatus provided in the embodiment of the present disclosure, the sound collection device collects signal data under the second test environment for different wind speeds and different wind directions, respectively, and sends the signal data under the second test environment to the test device, so that the test device determines the impact of the wind noise of winds at different wind speeds and different wind directions on the audio quality of the terminal device under test. It can be seen that the present disclosure provides a wind noise measurement method applicable for terminal device(s), and the method may be used to measure the impact of the wind noise on various types of terminal devices.

Optionally, in an embodiment of the present disclosure, the second test environment includes:

> only applying the winds at the wind speeds and the wind directions to the terminal device under test via a wind generator;
> playing the audio test signal to the sound collection device via the terminal device under test, and applying the winds at the wind speeds and the wind directions to the terminal device under test via the wind generator;
> only playing the audio test signal to the sound collection device via the terminal device under test.

Optionally, in an embodiment of the present disclosure, the signal data under the second test environment includes:

> pure noise signal data X2 collected by the sound collection device when only the winds are applied;
> audio test signal data Y2 under a noisy environment collected by the sound collection device when the audio test signal is played and the winds are applied;
> audio test signal data Z2 under a quiet environment collected by the sound collection device when only the audio test signal is played.

Optionally, in an embodiment of the present disclosure, the transceiving module is further configured to:
in response to the audio test signal played by the terminal device under test to the sound collection device including a plurality of channels, collect signal data corresponding to each channel under the second test environment, respectively.

Optionally, in an embodiment of the present disclosure, the transceiving module is further configured to:
send the signal data corresponding to each channel under the second test environment to the test device.

Optionally, in an embodiment of the present disclosure, the transceiving module is further configured to:
collect the signal data under the second test environment when no anti-noise mode is turned on and when different anti-noise modes are turned on, respectively.

Optionally, in an embodiment of the present disclosure, the transceiving module is further configured to:
send, to the test device, corresponding signal data under the second test environment when no anti-noise mode is turned on and the signal data under the second test environment corresponding to different anti-noise modes, respectively.

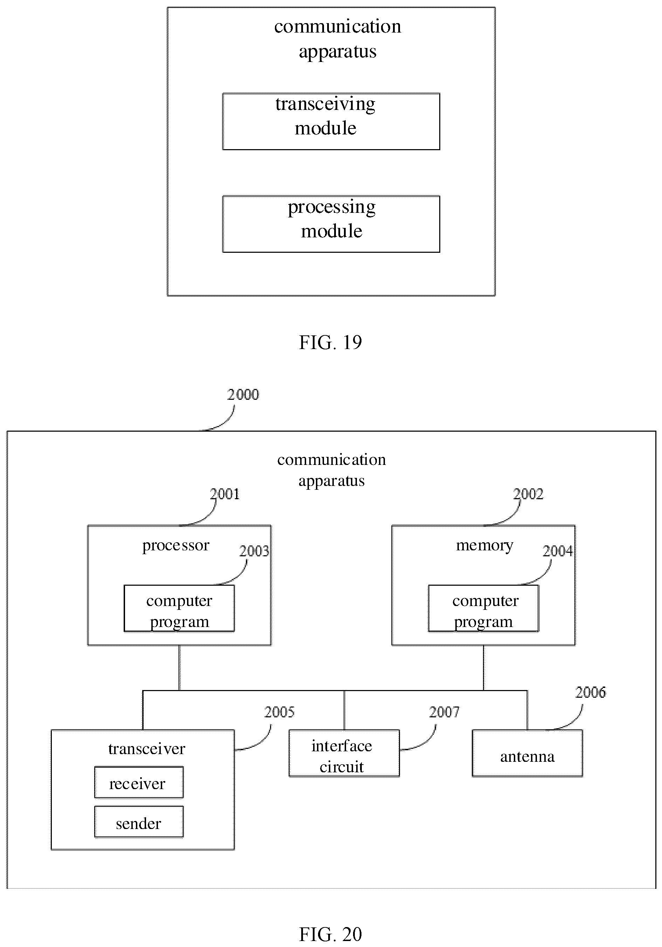

FIG. 19 is a schematic diagram of a structure of a communication apparatus provided by an embodiment of the present disclosure. As shown in FIG. 19, the apparatus may include:

a transceiving module configured to receive signal data under a first test environment corresponding to different wind speeds and different wind directions sent by a terminal device under test, and/or signal data under a second test environment corresponding to different wind speeds and different wind directions sent by a sound collection device;
a processing module configured to calculate measurement results corresponding to different wind speeds and different wind directions based on the signal data under the first test environment and/or the signal data under the second test environment;
the processing module is further configured to determine the impact of the wind noise of winds at different wind speeds and different wind directions on an audio quality of the terminal device under test based on the measurement results.

In summary, in the communication apparatus provided in the embodiment of the present disclosure, the measuring device receives signal data under the first test environment corresponding to different wind speeds and different wind directions sent by the terminal device under test, and/or signal data under the second test environment corresponding to different wind speeds and different wind directions sent by the sound collection device. Then, the measuring device calculates the measurement results corresponding to different wind speeds and different wind directions based on the signal data under the first test environment and/or the signal data under the second test environment, and determines the impact of the wind noise of the winds at different wind speeds and different wind directions on the audio quality of the terminal device under test based on the measurement results. It can be seen that the present disclosure provides a wind noise measurement method applicable for terminal device(s), and the method may be used to measure the impact of the wind noise on various types of terminal devices.

Optionally, in an embodiment of the present disclosure, the first test environment includes:

only applying the winds at the wind speeds and the wind directions to the terminal device under test via the wind generator;
playing the audio test signal to the terminal device under test via the sound source device, and applying the winds at the wind speeds and the wind directions to the terminal device under test via the wind generator;
only playing the audio test signal to the terminal device under test via the sound source device.

Optionally, in an embodiment of the present disclosure, the signal data under the first test environment includes:

pure noise signal data X1 collected by the terminal device under test when only the winds are applied,;
audio test signal data Y1 under the noisy environment collected by the terminal device under test when the audio test signal is played and the winds are applied;
audio test signal data Z1 under a quiet environment collected by the terminal device under test when only the audio test signal is played.

Optionally, in an embodiment of the present disclosure, the second test environment includes:

only applying the winds at the wind speeds and the wind directions to the terminal device under test via the wind generator;
playing the audio test signal to the sound collection device via the terminal device under test, and applying the winds at the wind speeds and the wind directions to the terminal device under test via the wind generator;
only playing the audio test signal to the sound collection device via the terminal device under test.

Optionally, in an embodiment of the present disclosure, the signal data under the second test environment includes:

pure noise signal data X2 collected by the sound collection device when only the winds are applied;
audio test signal data Y2 under a noisy environment collected by the sound collection device when the audio test signal is played and the winds are applied;
audio test signal data Z2 under a quiet environment collected by the sound collection device when only the audio test signal is played.

Optionally, in an embodiment of the present disclosure, the transceiving module is further configured to:

receive signal data corresponding to each channel under a first test environment corresponding to different wind speeds and different wind directions sent by the terminal device under test;
receiving the signal data under the second test environment corresponding to different wind speeds and different wind directions sent by the sound collection device includes:
receiving signal data corresponding to each channel under the second test environment corresponding to different wind speeds and different wind directions sent by the sound collection device.

Optionally, in an embodiment of the present disclosure, the processing module is further configured to:

calculate measurement results for each channel corresponding to different wind speeds and different wind directions based on the signal data corresponding to each channel under the first test environment and/or the signal data corresponding to each channel under the second test environment;

the processing module is further configured to:

determine the impact of the wind noise of different wind speeds and different wind directions on the audio quality of each channel of the terminal device under test based on the measurement results for each channel corresponding to different wind speeds and different wind directions.

Optionally, in an embodiment of the present disclosure, the transceiving module is further configured to:

receive signal data under the first test environment corresponding to different wind speeds and different wind directions when no anti-noise mode is turned on, and signal data under the first test environment corresponding to different wind speeds and different wind directions in different anti-noise modes, sent by the terminal device under test;

the transceiving module is further configured to:

receive signal data under the second test environment corresponding to different wind speeds and different wind directions when no anti-noise mode is turned on, as well as signal data under the second test environment corresponding to different wind speeds and different wind directions in different anti-noise modes, sent by the sound collection device.

Optionally, in an embodiment of the present disclosure, the processing module is further configured to:

calculate measurement results corresponding to different wind speeds and different wind directions in different anti-noise modes based on the signal data under the first test environment and/or the signal data under the second test environment corresponding to different wind speeds and different wind directions in different anti-noise modes; and

calculate measurement results corresponding to different wind speeds and different wind directions when no anti-noise mode is turned on based on the signal data under the first test environment and/or the signal data under the second test environment corresponding to different wind speeds and different wind directions when no anti-noise mode is turned on;

the processing module is further configured to:

determine the impact of the wind noise of different wind speeds and different wind directions in different anti-noise modes on the audio quality of the terminal device under test based on the measurement results corresponding to different wind speeds and different wind directions in different anti-noise modes;

determine the impact of the impact of the wind noise of different wind speeds and different wind directions on the audio quality of the terminal device under test when no anti-noise mode is turned on based on the measurement results corresponding to different wind speeds and different wind directions when no anti-noise mode is turned on,.

Optionally, in an embodiment of the present disclosure, the measurement result includes at least one of:

a directional response of the wind noise;
a wind noise overload point;
a wind noise distortion rate;
a signal quality parameter used to evaluate a communication signal of the terminal device under test.

Optionally, in an embodiment of the present disclosure, in response to the terminal device under test being a signal transmission end, the directional response of the wind noise is: an audio signal sent by the terminal device under test to a signal reception end after the terminal device under test collects the audio signal;

in response to the terminal device under test being a signal reception end, the directional response of the wind noise is: an audio signal collected by a sound collection side after the terminal device under test plays a received audio signal.

Optionally, in an embodiment of the present disclosure, the signal quality parameter includes at least one of:

a Signal-to-Noise Ratio (SNR);
a Signal-to-Distortion Ratio (SDR);
a Source-to-Artifact Ratio (SAR);
a Short-Time Objective Intelligibility (STOI); or
a Perceptual Evaluation of Speech Quality (PESQ).

Optionally, in an embodiment of the present disclosure, the processing module is further configured to:

for different wind speeds, represent a communication quality of the terminal device under test at a corresponding wind speed using a lowest signal quality parameter corresponding to all wind directions;

for each wind direction, determine a maximum wind speed corresponding to all measurement results that meet a preset condition among measurement results corresponding to the wind direction as a maximum wind speed that is supportable under the wind direction, and determine a minimum wind speed among maximum wind speeds that are supportable under all wind directions as a maximum wind speed that is supportable by the terminal device under test;
determine a wind speed corresponding to a lowest wind noise overload point corresponding to all wind directions as a maximum wind speed that is supportable by the terminal device under test when collecting an ambient sound.

Optionally, in an embodiment of the present disclosure, the apparatus is further configured to:
determine the anti-noise effect of each anti-noise mode based on corresponding measurement results when different anti-noise modes are turned on and corresponding measurement results when no anti-noise mode is turned on.

Referring to FIG. 20, it is a schematic diagram of a structure of a communication apparatus 2000 provided in an embodiment of the present disclosure. The communication apparatus 2000 may be a network device, or a terminal device, or may be a chip, a chip system, or a processor that supports the network device to implement the above methods, or may be a chip, a chip system, or a processor that supports the terminal device to implement the above methods. The apparatus may be used to implement the methods described in the above method embodiments, and for details, reference may be made to the descriptions in the above method embodiments.

The communication apparatus 2000 may include one or more processors 2001. The processor 2001 may be a general-purpose processor or a special-purpose processor, etc. For example, the processor 2001 may be a baseband processor or a central processor. The baseband processor may be configured to process a communication protocol and communication data, and the central processor may be configured to control the communication apparatus (such as a base station, a baseband chip, a terminal device, a terminal device chip, a DU or a CU, etc.) to execute a computer program to process data of the computer program.

Optionally, the communication apparatus 2000 may further include one or more memories 2002, on which a computer program 2004 may be stored. The processor 2001 executes the computer program 2004 to cause the communication apparatus 2000 to perform the methods described in the above method embodiments. Optionally, data may also be stored in the memory(memories) 2002. The communication apparatus 2000 and the memory(memories) 2002 may be provided separately or integrated together.

Optionally, the communication apparatus 2000 may further include a transceiver 2005 and an antenna 2006. The transceiver 2005 may be referred to as a transceiving unit, a transceiver, or a transceiving circuit, etc., and is configured to implement a transceiving function. The transceiver 2005 may include a receiver and a sender. The receiver may be referred to as a receiver or a receiving circuit, etc., and is configured to implement a receiving function. The sender may be referred to as a sender or a sending circuit, etc., and is configured to implement a sending function.

Optionally, the communication apparatus 2000 may further include one or more interface circuits 2007. The interface circuit 2007 is configured to receive code instructions and transmit them to the processor 2001. The processor 2001 runs the code instructions to cause the communication apparatus 2000 to perform the methods described in the above method embodiments.

In an implementation, the processor 2001 may include a transceiver for implementing receiving and sending functions. For example, the transceiver may be a transceiving circuit, or an interface, or an interface circuit. The transceiving circuit, interface, or interface circuit for implementing the receiving and sending functions may be separate or integrated. The above-mentioned transceiving circuit, interface, or interface circuit may be configured to read and write code/data, or the above-mentioned transceiving circuit, interface, or interface circuit may be configured to perform transmission or delivering of signals.

In an implementation, the processor 2001 may store a computer program 2003. The computer program 2003 is run on the processor 2001 to cause the communication apparatus 2000 to perform the methods described in the above method embodiments. The computer program 2003 may be solidified in the processor 2001, in which case the processor 2001 may be implemented by hardware.

In an implementation, the communication apparatus 2000 may include a circuit, and the circuit may implement the functions of sending, or receiving or communicating in the aforementioned method embodiments. The processor and transceiver described in the present disclosure may be implemented in an Integrated Circuit (IC), an analog IC, a Radio Frequency Integrated Circuit (RFIC), a mixed signal IC, an Application Specific Integrated Circuit (ASIC), a Printed Circuit Board (PCB), an electronic device, etc. The processor and transceiver may also be manufactured using various IC process technologies, such as Complementary Metal Oxide Semiconductor (CMOS), N-type metal oxide semiconductor (nMetal -oxide-semiconductor, NMOS), P-type metal oxide semiconductor (positive channel metal oxide semiconductor, PMOS), Bipolar Junction Transistor (BJT), bipolar CMOS (BiCMOS), silicon germanium (SiGe), gallium arsenide (GaAs), etc.

The communication apparatus described in the above embodiments may be a network device or a terminal device, but the scope of the communication apparatus described in the present disclosure is not limited thereto, and the structure of the communication apparatus may not be limited by FIG. 20. The communication apparatus may be an independent device or may be a part of a large device. For example, the communication apparatus may be:

(1) an independent Integrated Circuit (IC), or a chip, or a chip system or a subsystem;
(2) a set of one or more ICs, optionally, the IC set may include a storage component for storing data or computer program(s);
(3) ASIC, such as modem;
(4) a module that may be embedded in other device(s);
(5) a receiver, a terminal device, an intelligence terminal device, a cellular phone, a wireless device, a handheld device, a mobile unit, a vehicle-mounted device, a network device, a cloud device, an artificial intelligence device, etc.;
(6) Others.

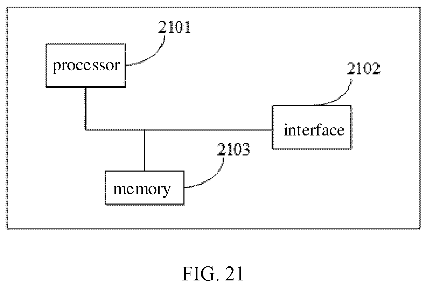

For a case where the communication apparatus may be a chip or a chip system, reference may be made to the schematic diagram of the chip structure shown in FIG. 21. The chip shown in FIG. 21 includes a processor 2101 and an interface 2102. There may be one or more processors 2101, and the number of interface(s) 2102 may be more than one.

Optionally, the chip further includes a memory 2103, and the memory 2103 is configured to store necessary computer program(s) and data.

Those skilled in the art may also understand that the various illustrative logical blocks and steps listed in the embodiments of the present disclosure may be implemented by electronic hardware, computer software, or a combination of the two. Whether such function(s) is(are) implemented by hardware or software depends on the specific application and design requirements of the entire system. Those skilled in the art may use various methods to implement the functions described for each specific application, but such implementation should not be understood as going beyond the scope of protection of the embodiments of the present disclosure.

The present disclosure further provides a readable storage medium having instructions stored thereon. When the instructions are executed by a computer, the functions of any one of the above method embodiments are implemented.

The present disclosure further provides a computer program product. When the computer program product is executed by a computer, the functions of any one of the above method embodiments are implemented.

The above embodiments may be implemented in whole or in part by software, hardware, firmware, or any combination thereof. When implemented in software, the embodiments may be implemented in whole or in part in the form of a computer program product. The computer program product includes one or more computer programs. When the computer program(s) is(are) loaded and executed on a computer, processes or functions described in accordance with the embodiments of the present disclosure are generated in whole or in part. The computer may be a general-purpose computer, a special-purpose computer, a computer network, or other programmable device. The computer program(s) may be stored in a computer-readable storage medium, or may be transferred from one computer-readable storage medium to another, for example, the computer program(s) may be transferred from a website, computer, server, or data center to another website, computer, server or data center through a wired manner (such as coaxial cable, optical fiber, DSL (Digital Subscriber Line)) or a wireless manner (such as infrared, wireless, microwave, etc.). The computer-readable storage medium may be any available medium that can be accessed by a computer or a data storage device such as a server, data center, etc. that contains one or more available media integrated. The available medium may be magnetic medium (for example, floppy disk, hard disk, magnetic tape), optical medium (for example, high-density DVD (Digital Video Disc)), or semiconductor medium (for example, SSD (Solid State Disk)), etc.

Those of ordinary skill in the art can understand that first, second, and other numerical numbers involved in the present disclosure are only for convenience of description and are not used to limit the scope of the embodiments of the disclosure, nor to indicate a sequential order.

The term "at least one" in the present disclosure can also be described as one or more, and the plurality can be two, three, four or more, and the present disclosure is not limited thereto. In the embodiments of the present disclosure, for a kind of technical features, "first", "second", "third", "A", "B", "C" and "D", etc. are used to distinguish technical features in the kind of technical features, and technical features described associated with "first", "second", "third", "A", "B", "C" and "D" do not imply any sequential order or order of size.

The corresponding relationships shown in each table in the present disclosure can be configured or predefined. Value(s) of information in each table is(are) only examples and can be configured as other values, which is not limited by the present disclosure. When configuring a corresponding relationship between information and each parameter, it is not necessarily required to configure all the corresponding relationships shown in each table. For example, in a table in the present disclosure, a corresponding relationship shown in some rows may not be configured. For another example, appropriate modified adjustments can be made based on the above table, such as splitting, merging, etc. Names of parameters shown in titles of the tables may also be other names understandable by a communication apparatus, and values or expressions of parameters may also be other values or expressions understandable by the communication apparatus. When implementing the tables, other data structures can also be used, such as an array, a queue, a container, a stack, a linear list, a pointer, a linked list, a tree, a graph, a structure body, a class, a heap, a hashed list or a hash table, and so on.

Predefinition in the present disclosure may be understood as definition, definition in advance, storage, pre-storage, pre-negotiation, pre-configuration, solidification, or pre-burning.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solutions. Skilled artisans may implement the described functions using different methods for each specific application, but such implementations should not be considered to be beyond the scope of the present disclosure.

Those skilled in the art can clearly understand that for the convenience and simplicity of description, for the specific working processes of the systems, apparatuses and units described above, reference can be made to the corresponding processes in the foregoing method embodiments, and repeated descriptions will be omitted here.

The above are only example embodiments of the present disclosure, but the protection scope of the present disclosure is not limited thereto. Any person familiar with the technical field can easily think of changes or substitutions within the technical scope disclosed in the present disclosure, and such changes or substitutions fall within the protection scope of the present disclosure. Therefore, the protection scope of the present disclosure should be determined by the appended claims.

**Claims**

1. A wind noise measurement method, performed by a terminal device under test, the method comprising:

   collecting signal data under a first test environment for different wind speeds and different wind directions, respectively, and sending the signal data under the first test environment to a test device, so that the test device determines an impact of wind noise of winds at different wind speeds and different wind directions on an audio quality of the terminal device under test; or
   playing an audio test signal to a sound collection device at different wind speeds and different wind directions, so that the sound collection device collects signal data under a second test environment for the different wind speeds and the different wind directions, respectively.

2. The method according to claim 1, wherein the first test environment comprises:

   only applying the winds at the wind speeds and the wind directions to the terminal device under test via a wind generator;
   playing the audio test signal to the terminal device under test via a sound source device, and applying the winds at the wind speeds and the wind directions to the terminal device under test via the wind generator;
   only playing the audio test signal to the terminal device under test via the sound source device.

3. The method according to claim 2, wherein the signal data under the first test environment comprises:

   pure noise signal data X1 collected by the terminal device under test when only the winds are applied;
   audio test signal data Y1 under a noisy environment collected by the terminal device under test when the audio test signal is played and the winds are applied;
   audio test signal data Z1 under a quiet environment collected by the terminal device under test when only the audio test signal is played.

4. The method according to claim 2, wherein collecting the signal data under the first test environment respectively comprises:
   in response to the audio test signal played by the sound source device to the terminal device under test comprising a plurality of channels, collecting signal data corresponding to each channel under the first test environment, respectively.

5. The method according to claim 4, wherein sending the signal data under the first test environment to the test device comprises:
   sending the signal data corresponding to each channel under the first test environment to the test device.

6. The method according to claim 2, wherein the sound source device comprises at least one of:

   an artificial mouth; or
   a speaker.

7. The method according to claim 6, wherein the audio test signal played by the sound source device to the terminal device under test is determined by the sound source device based on an audio test signal that is obtained from an other device and needs to be played;
   wherein:

   in response to the sound source device being the speaker, the audio test signal played by the sound source device to the terminal device under test is: an audio test signal that is obtained by the sound source device from the other device and needs to be played;

in response to the sound source device being the artificial mouth, the audio test signal played by the sound source device to the terminal device under test is: a signal obtained by the sound source device after performing, based on ambient noise, boosting and compensation on an audio test signal that is obtained from the other device and needs to be played.

8. The method according to claim 1, wherein collecting the signal data under the first test environment respectively comprises:
collecting the signal data under the first test environment respectively when no anti-noise mode is turned on and when different anti-noise modes are turned on.

9. The method according to claim 8, wherein sending the signal data under the first test environment to the test device comprises:
sending, to the test device, corresponding signal data under the first test environment when no anti-noise mode is turned on and signal data under the first test environment corresponding to the different anti-noise modes.

10. The method according to claim 1, wherein playing the audio test signal to the sound collection device comprises:
playing the audio test signal to the sound collection device respectively when no anti-noise mode is turned on and when different anti-noise modes are turned on.

11. The method according to claim 1, further comprising:
obtaining the audio test signal.

12. A wind noise measurement method, performed by a sound source device, the method comprising:
playing an audio test signal to a terminal device under test at different wind speeds and different wind directions, so that the terminal device under test collects signal data under a first test environment for the different wind speeds and the different wind directions, respectively.

13. The method according to claim 12, further comprising:
obtaining the audio test signal that needs to be played.

14. The method according to claim 13, wherein the sound source device comprises at least one of:

an artificial mouth; or
a speaker.

15. The method according to claim 14, wherein in response to the sound source device being the artificial mouth, playing the audio test signal to the terminal device under test comprises:

based on ambient noise, performing boosting and compensation on the obtained audio test signal that needs to be played, and sending the signal after boosting and compensation to the terminal device under test;
wherein in response to the sound source device being the speaker, playing the audio test signal to the terminal device under test comprises:
directly playing, to the terminal device under test, the obtained audio test signal that needs to be played.

16. A wind noise measurement method, performed by a sound collection device, the method comprising:
collecting signal data under a second test environment for different wind speeds and different wind directions, respectively, and sending the signal data under the second test environment to a test device, so that the test device determines an impact of wind noise of winds at the different wind speeds and the different wind directions on an audio quality of a terminal device under test.

17. The method according to claim 16, wherein the second test environment comprises:

only applying the winds at the wind speeds and the wind directions to the terminal device under test via a wind generator;
playing the audio test signal to a sound collection device via the terminal device under test, and applying the winds at the wind speeds and the wind directions to the terminal device under test via the wind generator;
only playing the audio test signal to the sound collection device via the terminal device under test.

18. The method according to claim 17, wherein the signal data under the second test environment comprises:

pure noise signal data X2 collected by the sound collection device when only the winds are applied;
audio test signal data Y2 under an noisy environment collected by the sound collection device when the audio test signal is played and the winds are applied;
audio test signal data Z2 under a quiet environment collected by the sound collection device when only the audio test signal is played.

19. The method according to claim 16, wherein collecting the signal data under the second test environment respectively comprises:
in response to the audio test signal played by the terminal device under test to the sound collection device comprising a plurality of channels, collecting signal data corresponding to each channel under the second test environment, respectively.

20. The method according to claim 19, wherein sending the signal data under the second test environment to the test device comprises:
sending the signal data corresponding to each channel under the second test environment to the test device.

21. The method according to claim 16, wherein collecting the signal data under the second test environment respectively comprises:
collecting the signal data under the second test environment respectively when no anti-noise mode is turned on and when different anti-noise modes are turned on.

22. The method according to claim 21, wherein sending the signal data under the second test environment to the test device comprises:
sending, to the test device, corresponding signal data under the second test environment when no anti-noise mode is turned on and signal data under the second test environment corresponding to different anti-noise modes.

23. A wind noise measurement method, performed by a test device, the method comprising:

receiving signal data under a first test environment corresponding to different wind speeds and different wind directions sent from a terminal device under test, and/or signal data under a second test environment corresponding to different wind speeds and different wind directions sent from a sound collection device;
calculating measurement results corresponding to the different wind speeds and the different wind directions based on the signal data under the first test environment and/or the signal data under the second test environment; and
based on the measurement results, determining an impact of wind noise of winds at the different wind speeds and the different wind directions on an audio quality of the terminal device under test.

24. The method according to claim 23, wherein the first test environment comprises:

only applying the winds at the wind speeds and the wind directions to the terminal device under test via a wind generator;
playing an audio test signal to the terminal device under test via a sound source device, and applying the winds at the wind speeds and the wind directions to the terminal device under test via the wind generator;
only playing the audio test signal to the terminal device under test via the sound source device.

25. The method according to claim 24, wherein the signal data under the first test environment comprises:

pure noise signal data X1 collected by the terminal device under test when only the winds are applied;
audio test signal data Y1 under a noisy environment collected by the terminal device under test when the audio test signal is played and the winds are applied ;
audio test signal data Z1 under a quiet environment collected by the terminal device under test when only the audio test signal is played.

26. The method according to claim 23, wherein the second test environment comprises:

only applying the winds at the wind speeds and the wind directions to the terminal device under test via a wind generator;
playing an audio test signal to the sound collection device via the terminal device under test, and applying the winds at the wind speeds and the wind directions to the terminal device under test via the wind generator;
only playing the audio test signal to the sound collection device via the terminal device under test.

27. The method according to claim 26, wherein the signal data under the second test environment comprises:

pure noise signal data X2 collected by the sound collection device when only the winds are applied;
audio test signal data Y2 under a noisy environment collected by the sound collection device when the audio test signal is played and the winds are applied;
audio test signal data Z2 under a quiet environment collected by the sound collection device when only the audio test signal is played.

**28.** The method according to claim 23, wherein receiving the signal data under the first test environment corresponding to the different wind speeds and the different wind directions sent from the terminal device under test comprises:

receiving signal data corresponding to each channel under the first test environment corresponding to the different wind speeds and the different wind directions sent from the terminal device under test;

wherein receiving the signal data under the second test environment corresponding to the different wind speeds and the different wind directions sent from the sound collection device comprises:

receiving signal data corresponding to each channel under the second test environment corresponding to the different wind speeds and the different wind directions sent from the sound collection device.

**29.** The method according to claim 28, wherein calculating the measurement results corresponding to the different wind speeds and the different wind directions based on the signal data under the first test environment and/or the signal data under the second test environment comprises:

calculating a measurement result for each channel corresponding to the different wind speeds and the different wind directions based on the signal data corresponding to the each channel under the first test environment and/or the signal data corresponding to the each channel under the second test environment;

wherein determining the impact of the wind noise of the different wind speeds and the different wind directions on the audio quality of the terminal device under test based on the measurement results comprises:

based on the measurement result for each channel corresponding to the different wind speeds and the different wind directions, determining the impact of the wind noise of the different wind speeds and the different wind directions on the audio quality of the each channel of the terminal device under test.

**30.** The method according to claim 23, wherein receiving the signal data under the first test environment corresponding to the different wind speeds and the different wind directions sent from the terminal device under test comprises:

receiving the signal data under the first test environment corresponding to the different wind speeds and the different wind directions when no anti-noise mode is turned on, and the signal data under the first test environment corresponding to the different wind speeds and the different wind directions in different anti-noise modes sent from the terminal device under test;

wherein receiving the signal data under the second test environment corresponding to the different wind speeds and the different wind directions sent from the sound collection device comprises:

receiving the signal data under the second test environment corresponding to the different wind speeds and the different wind directions when no anti-noise mode is turned on, and the signal data under the second test environment corresponding to the different wind speeds and the different wind directions in different anti-noise modes sent from the sound collection device.

**31.** The method according to claim 29, wherein calculating the measurement results corresponding to the different wind speeds and the different wind directions based on the signal data under the first test environment and/or the signal data under the second test environment comprises:

based on the signal data under the first test environment and/or the signal data under the second test environment corresponding to the different wind speeds and the different wind directions in different anti-noise modes, calculating the measurement results corresponding to the different wind speeds and the different wind directions in different anti-noise modes; and

based on the signal data under the first test environment and/or the signal data under the second test environment corresponding to the different wind speeds and the different wind directions when no anti-noise mode is turned on, calculating the measurements corresponding to the different wind speeds and the different wind directions when no anti-noise mode is turned on;

wherein determining the impact of the wind noise of the different wind speeds and the different wind directions on the audio quality of the terminal device under test based on the measurement results comprises:

based on the measurement results corresponding to the different wind speeds and the different wind directions in different anti-noise modes, determining the impact of the wind noise of the different wind speeds and the different wind directions in different anti-noise modes on the audio quality of the terminal device under test; and

based on the measurement results corresponding to the different wind speeds and the different wind directions when no anti-noise mode is turned on, determining the impact of the wind noise of the different wind speeds and the different wind directions on the audio quality of the terminal device under test when no anti-noise mode is turned on.

32. The method according to any one of claims 23 to 31, wherein the measurement result comprises at least one of:

a directional response of wind noise;
a wind noise overload point;
a wind noise distortion rate; or
a signal quality parameter used to evaluate a communication signal of the terminal device under test.

33. The method according to claim 32, wherein in response to the terminal device under test being a signal transmission end, the directional response of the wind noise is: an audio signal sent by the terminal device under test to a signal reception end after the terminal device under test collects the audio signal;
wherein in response to the terminal device under test being a signal reception end, the directional response of the wind noise is: an audio signal collected by a sound collection side after the terminal device under test plays a received audio signal.

34. The method according to claim 32, wherein the signal quality parameter comprises at least one of:

a Signal-to-Noise Ratio (SNR);
a Signal-to-Distortion Ratio (SDR);
a Source-to-Artifact Ratio (SAR);
a Short-Time Objective Intelligibility (STOI); or
a Perceptual Evaluation of Speech Quality (PESQ).

35. The method according to claim 32, wherein determining the impact of the wind noise of the different wind speeds and the different wind directions on the audio quality of the terminal device under test comprises:

for the different wind speeds, representing a communication quality of the terminal device under test at a corresponding wind speed using a lowest signal quality parameter corresponding to all wind directions;
for each wind direction, determining a maximum wind speed corresponding to all measurement results that meet a preset condition among measurement results corresponding to the wind direction as a maximum wind speed that is supportable under the wind direction, and determining a minimum wind speed among maximum wind speeds that are supportable under all wind directions as a maximum wind speed that is supportable by the terminal device under test; and
determining a wind speed corresponding to a lowest wind noise overload point corresponding to all wind directions as a maximum wind speed that is supportable by the terminal device under test when collecting an ambient sound.

36. The method according to claim 31, further comprising:
determining an anti-noise effect of each anti-noise mode based on corresponding measurement results when different anti-noise modes are turned on and a corresponding measurement result when no anti-noise mode is turned on.

37. A communication apparatus, configured in a terminal device under test, the communication apparatus comprising:

a transceiving module, configured to collect signal data under a first test environment for different wind speeds and different wind directions, respectively, and send the signal data under the first test environment to a test device, so that the test device determines an impact of wind noise of winds at the different wind speeds and the different wind directions on an audio quality of the terminal device under test; or
wherein the transceiving module is further configured to play an audio test signal to a sound collection device at different wind speeds and different wind directions, so that the sound collection device collect signal data under a second test environment for the different wind speeds and the different wind directions.

38. A communication apparatus, configured in a sound source device, the communication apparatus comprising:
a transceiving module configured to play an audio test signal to a terminal device under test at different wind speeds and different wind directions, so that the terminal device under test collects signal data under a first test environment for the different wind speeds and the different wind directions, respectively.

39. A communication apparatus, configured in a sound collection device, the communication apparatus comprising:
a transceiving module configured to collect signal data under a second test environment for different wind speeds and different wind directions, and send the signal data under the second test environment to a test device, so that the test device determines an impact of wind noise of winds at the different wind speeds and the different wind directions on an audio quality of a terminal device under test.

40. A communication apparatus, configured in a test device, the communication apparatus comprising:

a transceiving module configured to receive signal data under a first test environment corresponding to different wind speeds and different wind directions sent by a terminal device under test, and/or signal data under a second test environment corresponding to different wind speeds and different wind directions sent by a sound collection device; and

a processing module configured to calculate measurement results corresponding to the different wind speeds and the different wind directions based on the signal data under the first test environment and/or the signal data under the second test environment;

wherein the processing module is further configured to determine an impact of wind noise of winds at the different wind speeds and the different wind directions on an audio quality of the terminal device under test based on the measurement results.

41. A communication apparatus, wherein the apparatus comprises a processor and a memory, a computer program is stored in the memory, and the processor executes the computer program stored in the memory to cause the apparatus to perform the method according to any one of claims 1 to 11, or the processor executes the computer program stored in the memory to cause the apparatus to perform the method according to claims 12 to 15, or the processor executes the computer program stored in the memory to cause the apparatus to perform the method according to claims 16 to 22, or the processor executes the computer program stored in the memory to cause the apparatus to perform the method according to claims 23 to 36.

42. A communication apparatus, comprising: a processor and an interface circuit, wherein:

the interface circuit is configured to receive code instructions and transmit the code instructions to the processor;

the processor is configured to run the code instructions to perform the method according to any one of claims 1 to 11, or to run the code instructions to perform the method according to claims 12 to 15, or to run the code instructions to perform the method according to claims 16 to 22, or to run the code instructions to perform the method according to claims 23 to 36.

43. A computer-readable storage medium storing instructions, wherein when the instructions are executed, the method according to any one of claims 1 to 11 is implemented, or when the instructions are executed, the method according to claims 12 to 15 is implemented, or when the instructions are executed, the method according to claims 16 to 22 is implemented, or when the instructions are executed, the method according to claims 23 to 36 is implemented.

Collect signal data under a first test environment for different wind speeds and different wind directions, respectively, and send the signal data under the first test environment to a test device, so that the test device determines an impact of wind noise of winds at different wind speeds and different wind directions on an audio quality of the terminal device under test; or, play an audio test signal to a sound collection device at different wind speeds and different wind directions, so that the sound collection device collects signal data under a second test environment for different wind speeds and different wind directions, respectively

— 101

FIG. 1a

wind generator

airflow

sound source device

audio test signal

terminal device under test

signal data under the first test environment

test device

sound collection device

audio test signal

signal data under the second test environment

FIG. 1b

wind generator

airflow

sound source device

audio test signal

terminal device under test

signal data under the first test environment

communication device

test device

sound collection device

audio test signal

signal data under the second test environment

FIG. 1c

In response to the audio test signal played by the sound source device to the terminal device under test including a plurality of channels, collect signal data corresponding to each channel under the first test environment respectively. ⌐— 201

Send the signal data corresponding to each channel under the first test environment to the test device ⌐— 202

FIG. 2

Collect signal data under the first test environment for different wind speeds and different wind directions when no anti-noise mode is turned on and when different anti-noise modes are turned on, respectively ⌐— 301

Send, to the test device, the signal data under the first test environment corresponding to different wind speeds and different wind directions when no anti-noise mode is turned on, as well as signal data under the first test environment corresponding to different wind speeds and different wind directions in different anti-noise modes, respectively ⌐— 302

FIG. 3

Play an audio test signal to the sound collection device at different wind speeds and different wind directions when no anti-noise mode is turned on and when different anti-noise modes are turned on ⌐— 401

FIG. 4

Obtain an audio test signal ⌐— 501

FIG. 5

Play the audio test signal to the terminal device under test at different wind speeds and different wind directions, so that the terminal device under test collects the signal data under the first test environment for different wind speeds and different wind directions, respectively — 601

FIG. 6

Obtain the audio test signal that needs to be played — 701

FIG. 7

In response to the sound source device being an artificial mouth, perform boosting and compensation on the obtained audio test signal that needs to be played based on ambient noise, and play the signal after boosting and compensation to the terminal device under test — 801

FIG. 8

In response to the sound source device being a speaker, directly play the obtained audio test signal that needs to be played to the terminal device under test — 901

FIG. 9

Collect signal data under the second test environment for different wind speeds and different wind directions, respectively, and send the signal data under the second test environment to the test device, so that the test device determines the impact of the wind noise of winds at different wind speeds and different wind directions on the audio quality of the terminal device under test — 1001

FIG. 10

In response to the audio test signal played by the terminal device under test to the sound collection device including a plurality of channels, collect signal data corresponding to each channel under the second test environment for different wind speeds and different wind directions — 1101

Send the signal data corresponding to each channel under the second test environment for different wind speeds and different wind directions to the test device — 1102

FIG. 11

Collect signal data under the second test environment when no anti-noise mode is turned on and when different anti-noise modes are turned on for different wind speeds and different wind directions, respectively — 1201

Send, to the test device, the signal data under the second test environment corresponding to different wind speeds and different wind directions when no anti-noise mode is turned on, as well as the signal data under the second test environment corresponding to different wind speeds and different wind directions in different anti-noise modes — 1202

FIG. 12

Receive signal data under the first test environment corresponding to different wind speeds and different wind directions sent by the terminal device under test, and/or, signal data under the second test environment corresponding to different wind speeds and different wind directions sent by the sound collection device — 1301

Calculate measurement results corresponding to different wind speeds and different wind directions based on the signal data under the first test environment and/or the signal data under the second test environment — 1302

Determine the impact of the wind noise of winds at different wind speeds and different wind directions on the audio quality of the terminal device under test based on the measurement results — 1303

FIG. 13

Receive signal data corresponding to each channel under a first test environment corresponding to different wind speeds and different wind directions sent by the terminal device under test, and/or receive signal data corresponding to each channel under a second test environment corresponding to different wind speeds and different wind directions sent by the sound collection device ⟋⎯ 1401

Calculate measurement results of each channel corresponding to different wind speeds and different wind directions based on the signal data corresponding to each channel under the first test environment and/or the signal data corresponding to each channel under the second test environment ⟋⎯ 1402

Determine the impact of wind noise of different wind speeds and different wind directions on the audio quality of each channel of the terminal device under test based on the measurement result(s) of each channel corresponding to different wind speeds and different wind directions ⟋⎯ 1403

FIG. 14

Receive the signal data under the first test environment corresponding to different wind speeds and different wind directions when no anti-noise mode is turned on and the signal data under the first test environment corresponding to different wind speeds and different wind directions in different anti-noise modes sent from the terminal device under test; and/or, receive the signal data under the second test environment corresponding to different wind speeds and different wind directions when no anti-noise mode is turned on and the signal data under the second test environment corresponding to different wind speeds and different wind directions in different anti-noise modes sent from the sound collection device ⟋⎯ 1501a

Calculate the measurement results corresponding to different wind speeds and different wind directions in different anti-noise modes based on the signal data under the first test environment and/or the signal data under the second test environment corresponding to different wind speeds and different wind directions in different anti-noise modes, and calculate the measurement results corresponding to different wind speeds and different wind directions when no anti-noise mode is turned on based on the signal data under the first test environment and/or the signal data under the second test environment corresponding to different wind speeds and different wind directions when no anti-noise mode is turned on ⟋⎯ 1502a

Based on the measurement results corresponding to different wind speeds and different wind directions in different anti-noise modes, determine the impact of the wind noise of different wind speeds and different wind directions in different anti-noise modes on the audio quality of the terminal device under test; based on the measurement results corresponding to different wind speeds and different wind directions when no anti-noise mode is turned on, determine the impact of the wind noise of different wind speeds and different wind directions on the audio quality of the terminal device under test when no anti-noise mode is turned on ⟋⎯ 1503a

FIG. 15a

Based on the corresponding measurement results when different anti-noise modes are turned on and the corresponding measurement results when no anti-noise mode is turned on, determine the anti-noise effect of each anti-noise mode

— 1501b

FIG. 15b

communication apparatus

transceiving module

FIG. 16

communication apparatus

transceiving module

FIG. 17

communication apparatus

transceiving module

FIG. 18

communication
apparatus

transceiving
module

processing
module

FIG. 19

2000

communication
apparatus

2001

processor          2003

computer
program

2002

memory          2004

computer
program

2005

transceiver

receiver

sender

2007

interface
circuit

2006

antenna

FIG. 20

FIG. 21

## INTERNATIONAL SEARCH REPORT

| International application No. |
| --- |
| **PCT/CN2022/128763** |

**A. CLASSIFICATION OF SUBJECT MATTER**

H04R29/00(2006.01)i

According to International Patent Classification (IPC) or to both national classification and IPC

**B. FIELDS SEARCHED**

Minimum documentation searched (classification system followed by classification symbols)

IPC:H04R

Documentation searched other than minimum documentation to the extent that such documents are included in the fields searched

Electronic data base consulted during the international search (name of data base and, where practicable, search terms used)

CNABS; CNTXT; VEN; USTXT; ENTXT: CNKI: 风速, 风向, 音频, 声音, 语音, 风噪, 声道, 通道, 抗噪, 信噪比, wind, speed, direction, noise, voice, sound, channel, SNR

**C. DOCUMENTS CONSIDERED TO BE RELEVANT**

| Category* | Citation of document, with indication, where appropriate, of the relevant passages | Relevant to claim No. |
| --- | --- | --- |
| Y | CN 212910051 U (LINSATION INTELLIGENT TECHNOLOGY LIMITED) 06 April 2021 (2021-04-06)<br>description, paragraphs 0002-0037 | 1-43 |
| Y | CN 111182116 A (UNISOC SPREADTRUM COMMUNICATIONS (HUIZHOU) CO., LTD.) 19 May 2020 (2020-05-19)<br>description, paragraphs 0028-0084 | 1-43 |
| A | CN 112437391 A (AI SPEECH LTD.) 02 March 2021 (2021-03-02)<br>entire document | 1-43 |
| A | CN 113670369 A (NANJING UNIVERSITY OF AERONAUTICS AND ASTRONAUTICS) 19 November 2021 (2021-11-19)<br>entire document | 1-43 |
| A | US 2022208207 A1 (SHENZHEN SHOKZ CO., LTD.) 30 June 2022 (2022-06-30)<br>entire document | 1-43 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **14 July 2023** | **24 July 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2022/128763** |

| Patent document cited in search report | | | Publication date (day/month/year) | Patent family member(s) | Publication date (day/month/year) |
| --- | --- | --- | --- | --- | --- |
| CN | 212910051 | U | 06 April 2021 | None | |
| CN | 111182116 | A | 19 May 2020 | None | |
| CN | 112437391 | A | 02 March 2021 | None | |
| CN | 113670369 | A | 19 November 2021 | None | |
| US | 2022208207 | A1 | 30 June 2022 | None | |

Form PCT/ISA/210 (patent family annex) (July 2022)